# EUROPÄISCHE PATENTSCHRIFT

(11) **EP 3 377 353 B1**
(45) Veröffentlichungstag und Bekanntmachung des Hinweises auf die Patenterteilung: **26.06.2024**
(21) Anmeldenummer: 16793813.3
(22) Anmeldetag: 03.11.2016
(51) Int. Cl.: B60K 6/442, B60W 20/40, B60W 10/02, B60W 10/06, B60W 10/08, B60W 20/00

(54) **VERFAHREN ZUM BETREIBEN EINER ANTRIEBSEINRICHTUNG EINES HYBRIDFAHRZEUGES UND HYBRIDFAHRZEUG**
OPERATION METHOD OF A DRIVE APPARATUS OF A HYBRID VEHICLE AND HYBRID VEHICLE
PROCÉDÉ DE CONTRÔLE D'UN DISPOSITIF DE PROPULSION D'UN VÉHICULE HYBRIDE ET VÉHICULE HYBRIDE

(30) Priorität: 17.11.2015 DE 102015222692
(43) Veröffentlichungstag der Anmeldung: 26.09.2018
(73) Patentinhaber: Volkswagen Aktiengesellschaft, 38440 Wolfsburg (DE)
(72) Erfinder: FELSCH, Christian, 38104 Braunschweig (DE); RIELING, Jörg, 38116 Braunschweig (DE); PROCHAZKA, David, 38446 Wolfsburg (DE); ZILLMER, Michael, 38173 Sickte (DE)
(86) Internationale Anmeldenummer: PCT/EP2016/076581
(87) Internationale Veröffentlichungsnummer: WO 2017/084888

(56) Entgegenhaltungen:
- EP-A1- 2 127 984
- EP-A2- 0 965 475
- DE-A1-102005 033 723
- US-A1- 2009 166 113
- US-A1- 2012 245 785

## Beschreibung

Die vorliegende Erfindung betrifft ein Verfahren zum Steuern und/oder Betreiben einer Antriebseinrichtung eines Hybridfahrzeuges und ein Hybridfahrzeug, welches ausgebildet ist, das Verfahren zum Betreiben der Antriebseinrichtung des Hybridfahrzeuges auszuführen.

Eine Antriebseinrichtung eines Hybridfahrzeuges kann z. B. eine Verbrennungskraftmaschine und eine erste Elektromaschine und eine zweite Elektromaschine sowie einen elektrischen Akkumulator umfassen. Somit können verschiedene Antriebsaggregate zum Antreiben eines Antriebsrads verwendet werden.

Aus der deutschen Offenlegungsschrift DE 10 2013 001 095 A1 ist ein Verfahren zum Betreiben einer Hybridantriebseinrichtung bekannt, wobei die Hybridantriebseinrichtung eine mit einer ersten Achse des Kraftfahrzeugs wirkverbindbare Brennkraftmaschine, einen ebenfalls mit der ersten Achse wirkverbindbaren ersten Elektromotor sowie einen mit einer zweiten Achse des Kraftfahrzeugs wirkverbindbaren zweiten Elektromotor aufweist. Die zum Betreiben des zweiten Elektromotors verwendete elektrische Energie wird von dem von der Brennkraftmaschine unter Anhebung ihrer Leistung angetriebenen ersten Elektromotor erzeugt oder wird ausschließlich einem Energiespeicher für elektrische Energie entnommen.

Das europäische Patent EP 1 074 087 B1 offenbart ein Regelverfahren und eine Vorrichtung für die Brennkraftmaschine eines elektrischen Hybridfahrzeuges, wobei ein elektrischer Motor oder Motor/Generator zwischen der Maschine und dem kontinuierlichen variablen oder automatischen Getriebe angeordnet ist und wobei das Hybridfahrzeug eine Batterie und zugeordnete Steuerelemente aufweist. Dabei hält ein Steuermittel die Leistungsausgabe der Brennkraftmaschine im Wesentlichen entlang einer idealen Betriebslinie, wenn sich die Geschwindigkeit der Maschine ändert. Ein zweiter Elektromotor kann ferner vorgesehen sein und die Drehmomentausgabe des zweiten Elektromotors kann mittels einer Systemsteuerung variiert werden.

Die deutsche Offenlegungsschrift DE 10 2012 103 292 A1 offenbart ein Verfahren zum Betrieb eines elektrischen Antriebstranges eines Fahrzeuges, wobei mindestens zwei Elektromotoren, die jeweils mit einer Antriebsachse in Wirkverbindung stehen, und eine Steuereinrichtung vorgesehen sind, wobei ein Fahrerwunschmoment für einen motorischen oder generatorischen Betrieb ermittelt wird, und wobei bei einer vorliegenden Abtriebsdrehzahl eine erforderliche Gesamtleistung des elektrischen Abtriebstranges ermittelt wird, und wobei die Leistungen der einzelnen Elektromotoren ermittelt werden, und wobei die sich ergebenden Verlustleistungen der einzelnen Elektromotoren auf Basis von hinterlegten Verlustleistungskennfeldern für die einzelnen Elektromotoren minimiert werden.

Die deutsche Offenlegungsschrift DE 10 2009 019 485 A1 offenbart einen Antriebstrang mit einem ersten Elektromotor und einem Planetengetriebe und Fahrzeuge, die diesen Antriebstrang aufweisen. Der Antriebstrang weist eine erste elektrische Maschine, welche in einem motorischen oder generatorischen Betriebszustand betreibbar ist, und ein Planetengetriebe mit einer Drehzahländerungsvorrichtung auf, wobei das Planetengetriebe eine An- und eine Abtriebsseite aufweist und wobei die erste elektrische Maschine im motorischen oder generatorischen Betriebszustand steuernd in die Drehzahländerungsvorrichtung eingreift, so dass sich ein Übersetzungsverhältnis im Planetengetriebe ausbildet. Über die erste elektrische Maschine wird das Übersetzungsverhältnis des Planetengetriebes beeinflusst, wodurch zusätzlich auch der Arbeitspunkt der Verbrennungsmaschine bestimmt wird. Die Verbrennungskraftmaschine wird nahe ihres optimalen Wirkungsgrades betrieben. In einem rein elektrischen Betrieb arbeitet die zweite elektrische Maschine als Motor und die erste elektrische Maschine befindet sich im Leerlauf oder wird als Zusatzantrieb genutzt. Ein Teil der von der Verbrennungsmaschine erzeugten mechanischen Energie wird durch die erste elektrische Maschine in elektrische Energie umgewandelt und direkt an die zweite elektrische Maschine weitergeleitet. Beschleunigungen werden von der zweiten elektrischen Maschine unterstützt. Bei einer Verzögerung kann durch Rekuperation der Bremsenergie der Energiespeicher geladen werden.

Die Übersetzung der europäischen Patentschrift DE 602 23 850 T2 offenbart ein Verfahren zum Betrieb eines Antriebsystems eines Hybridfahrzeuges, wobei das Hybridfahrzeug eine Brennkraftmaschine, einen ersten Elektromotor/Generator, einen Planetengetriebemechanismus und einen zweiten Elektromotor/Generator umfasst. Ein Verhältnis zwischen einem ersten Moment, das durch die Brennkraftmaschine bei den Fahrzeugachsen erzeugt wird, und einem zweiten Moment, das durch den zweiten Elektromotor bei den Fahrzeugachsen bei jeder Zahnradposition der Übersetzung erzeugt wird, wird von einem ersten Verhältnis, wenn sowohl die Brennkraftmaschine als auch der zweite Elektromotor normal arbeiten, auf ein zweites Verhältnis, wenn entweder die Brennkraftmaschine oder der zweite Elektromotor gestört sind, geändert.

Die deutsche Offenlegungsschrift DE 10 2007 054 368 A1 offenbart eine Steuerarchitektur zur Auswahl eines optimalen Modus oder einer optimalen Übersetzung und Antriebsdrehzahl für ein Hybridantriebstrangsystem, welches eine Brennkraftmaschine, einen ersten und einen zweiten Elektromotor und ein elektromechanisches Getriebe umfasst, das selektiv betreibbar ist, um Drehmoment dazwischen zu übertragen und in mehreren Modi mit fester Übersetzung und stufenlos verstellbaren Modi betreibbar ist. Für jeden zulässigen Betriebsbereichszustand werden bevorzugte Betriebsbedingungen und bevorzugte Kosten bestimmt und darauf basierend ein bevorzugter Betriebsbereichszustand ausgewählt. Eine Kostenstrukturinformation, die in ein strategisches Managementeinrichtungssegment eingegeben und in einem Optimierungssegment verwendet wird, umfasst vorzugsweise Betriebskosten, die allgemein auf der Basis von Faktoren bestimmt werden, die mit den Fahrzeugfahreigenschaften, der Kraftstoffwirtschaftlichkeit, Emissionen und Batterielebensdauer für den bestimmten Drehmomentbereich in Beziehung stehen. Darüber hinaus werden Kosten in einem Kraftstoff- und elektrischen Energieverbrauch, die zu dem spezifischen Betriebspunkt des Antriebstrangsystems für das Fahrzeug gehören, zugewiesen und zugeordnet. Die optimalen Betriebskosten können bestimmt werden, indem ein Gesamtantriebstrangsystemverlust berechnet wird, welcher einen Ausdruck auf der Basis des Maschinenleistungsverlustes, der durch Kraftstoffwirtschaftlichkeit und Abgasemissionen angetrieben ist, plus Verlusten in dem mechanischen System, Verlusten in dem elektrischen System und Wärmeverluste umfasst.

Die amerikanische Offenlegungsschrift US 2009/0166113 A1 offenbart ein Hybridfahrzeug, das ein Batteriesystem, einen Verbrennungsmotor, einen ersten Motor/Generator, einen zweiten Motor/Generator und eine einrückbare Kupplungsanordnung umfasst. Die einrückbare Kupplungsanordnung ist zwischen dem Verbrennungsmotor und dem ersten Motor/Generator angeordnet. Wenn die einrückbare Kupplungsanordnung eingerückt ist, koppelt sie die Rotorwelle des zweiten Motors/Generators mit der hohlen Rotorwelle des ersten Motors/Generators. Die einrückbare Kupplungsanordnung kann auch in einem ersten mechanischen Modus arbeiten, der den Verbrennungsmotor selektiv in den zweiten Motor/Generator einkuppelt oder von ihm abkuppelt, oder in einem zweiten mechanischen Modus arbeiten, der einen Stoß zwischen dem Verbrennungsmotor und dem ersten Motor/Generator dämpft, wenn der Verbrennungsmotor bei einer Drehzahl arbeitet, die sich von einer Drehzahl des ersten Motors/Generators unterscheidet.

Die europäische Offenlegungsschrift EP 0 965 475 A2 offenbart ein Hybridfahrzeug, das entweder von einer Kraftmaschine oder von einem Motor angetrieben wird, indem eine Kupplung festgezogen oder gelöst wird, die zwischen einer Kraftmaschine und einem Getriebe angeordnet ist. Ein Generator ist mit der Kraftmaschine verbunden, und das Drehmoment der Kraftmaschine wird vom Generator aufgenommen, wenn die Leistungsquelle vom Motor auf die Kraftmaschine umgeschaltet wird. Die Kupplung wird festgezogen, wenn die Motordrehzahl des Motors und der Kraftmaschine zusammenfallen. Infolgedessen wird das Drehmoment, das dem Getriebe zugeführt wird, konstant gehalten, und ein Stoß aufgrund eines Umschaltens der Leistungsquelle wird unterdrückt.

Die amerikanische Offenlegungsschrift US 2012/0245785 A1 offenbart ein Hybridfahrzeug, das mit Leistung wenigstens eines Elektromotors oder einer Kraftmaschine betrieben wird. Wenn eine erforderliche Leistung eine Summe aus einer Leistung des Elektromotors, der von elektrischer Leistung angetrieben wird, die von einer Batterie bereitgestellt wird, und einer Leistung der Kraftmaschine übersteigt, während das Hybridfahrzeug in einem Fahrmodus betrieben wird, in dem wenigstens die Kraftmaschine bei eingerückter Kupplung als Antriebsquelle arbeitet, erhöht eine Übertragungsverhältnis-Änderungseinheit ein Verhältnis von elektrischer Übertragung zu mechanischer Übertragung der Leistung der Kraftmaschine, und löst eine Einrück-/Ausrück-Steuereinheit die Kupplung zu einem Zeitpunkt, an dem die mechanisch übertragene Leistung der Kraftmaschine bei eingerückter Kupplung null wird.

Die europäische Offenlegungsschrift EP 2 127 984 A1 offenbart, dass ein Kupplungsschlupf, wenn ein Hybridfahrzeug von einem Motorantrieb zu einem Hybridantrieb wechselt, reduziert wird, um einen Stoß zu reduzieren. Ein Hybridfahrzeug umfasst einen Verbrennungsmotor, einen Motorstarter-ISG-Motor, einen Hauptmotor, der Hinterräder antreibt, eine CVT-Riemenscheibe, die zwischen einer Motorabtriebswelle und einer Vorderradwelle angeordnet ist, eine Kupplung, die eine Abtriebswelle des Verbrennungsmotors und eine Eingangswelle des CVT miteinander verbindet, eine Batterie und einen Hybridcontroller. Wenn der Hybridcontroller einen Bedarf feststellt, eine Zugkraft des Verbrennungsmotors aus einem Zustand hinzuzufügen, in dem das Fahrzeug allein vom Hauptmotor angetrieben wird, steuert der Hybridcontroller die jeweiligen Komponenten, um den Verbrennungsmotor mit dem ISG-Motor in einem Zustand zu starten, in dem die Kupplung ausgerückt ist, ein Drehzahlverhältnis des CVT so zu steuern, dass eine Eingangsdrehzahl des CVT eine Zieldrehzahl zum Beginnen eines Einrückens der Kupplung erreicht, die Motordrehzahl zu erfassen, die Eingangsdrehzahl des CVT zu erfassen und die Kupplung einzurücken, wenn ein Unterschied zwischen diesen Drehzahlen in einen vorbestimmten Bereich fällt.

Die deutsche Offenlegungsschrift DE 10 2005 033 723 A1 offenbart einen Antriebsstrang sowie ein Verfahren zur Regelung eines Antriebsstranges, mit einem Verbrennungsmotor, einer ersten Elektromaschine, einer Kupplung, einer zweiten Elektromaschine, einem Getriebe und mindestens einem angetriebenen Rad, wobei der Verbrennungsmotor mit der ersten Elektromaschine verbunden ist und durch die Kupplung mit dem Getriebeeingang verbindbar ist, die zweite Elektromaschine mit dem Getriebeeingang verbindbar ist und der Getriebeausgang mit dem mindestens einen angetriebenen Rad verbunden ist. Beim Schalten der Kupplung werden die Momente des Verbrennungsmotors, der ersten Elektromaschine, der Kupplung und der zweiten Elektromaschine durch einen Zustandsregler geregelt, wodurch beim Schalten der Kupplung ein hoher Fahrkomfort erreicht wird. Die zweite Elektromaschine kann durch eine Kupplung vom Antriebsstrang abgekoppelt werden, um die elektrischen Leerlaufverluste zu reduzieren.

Im Stand der Technik ist der Übergang des Antriebs von einem Antriebsaggregat auf ein anderes häufig mit Problemen assoziiert. Beispielsweise kann im Zug beim Übergang des Antriebs von einem Antriebsaggregat auf ein anderes eine Zugkraftunterbrechung auftreten.

Es ist daher eine Aufgabe der vorliegenden Erfindung, ein Verfahren zum Betreiben einer Antriebseinrichtung eines Hybridfahrzeuges sowie ein Hybridfahrzeug bereitzustellen, wobei ein Wechsel von einem Antriebsaggregat auf ein anderes Antriebsaggregat des Hybridfahrzeuges zuverlässig und sicher durchgeführt werden kann und ein Fahrkomfort gewährleistet werden kann.

Die Aufgabe wird durch die Gegenstände der unabhängigen Ansprüche gelöst, welche auf ein Verfahren zum Steuern und/oder Betreiben einer Antriebseinrichtung eines Hybridfahrzeuges und auf ein Hybridfahrzeug gerichtet sind. Die abhängigen Ansprüche spezifizieren besondere Ausführungsformen der vorliegenden Erfindung.

Gemäß einem ersten Aspekt stellt die vorliegende Erfindung ein Verfahren zum Betreiben einer Antriebseinrichtung eines Betriebsfahrzeugs in Übereinstimmung mit dem unabhängigen Anspruch 1 bereit.

Gemäß einem zweiten Aspekt stellt die vorliegende Erfindung ein Hybridfahrzeug in Übereinstimmung mit dem unabhängigen Anspruch 10 bereit.

Weitere Aspekte der vorliegenden Erfindung werden in den abhängigen Ansprüchen, der Zeichnung und der folgenden Beschreibung dargelegt.

Ausführungsformen der vorliegenden Erfindung werden nun mit Bezug auf die angehängten Zeichnungen erläutert. Die Erfindung ist nicht auf die beschriebenen oder illustrierten Ausführungsformen beschränkt.
- Fig. 1: illustriert schematisch ein Hybridfahrzeug gemäß einer Ausführungsform der vorliegenden Erfindung, welches ausgebildet ist, ein Verfahren gemäß einer Ausführungsform der vorliegenden Erfindung auszuführen;
- Fig. 2: illustriert schematisch ein Hybridfahrzeug gemäß einer anderen Ausführungsform der vorliegenden Erfindung, welches ausgebildet ist, ein Verfahren gemäß einer Ausführungsform der vorliegenden Erfindung auszuführen;
- Fig. 3: illustriert Kurven von von den in Fig. 1 oder 2 illustrierten Hybridfahrzeugen im parallelen Hybridbetrieb bereitgestelltem Drehmoment und Leistung;
- Fig. 4: illustriert schematisch ein Verfahren zum Betreiben einer Antriebseinrichtung eines Hybridfahrzeuges gemäß einer Ausführungsform der vorliegenden Erfindung;
- Fig. 5: illustriert verschiedene Betriebsmodi der in Fig. 1 und 2 illustrierten Hybridfahrzeuge, welche in einem Verfahren gemäß einer Ausführungsform der vorliegenden Erfindung eingesetzt werden;
- Fig. 6: illustriert Verfahrensschritte bei einem Betriebsartenübergang von einem rein elektrischen Fahrbetrieb auf seriellen Hybridbetrieb gemäß einer Ausführungsform der vorliegenden Erfindung;
- Fig. 7: illustriert Verfahrensschritte während eines Betriebsartenübergangs von einem rein elektrischen Fahrbetrieb auf einen parallelen Hybridbetrieb gemäß einer Ausführungsform der vorliegenden Erfindung. Das erfindungsgemäße Abkoppeln der ersten elektrischen Maschine im parallelen Hybridbetrieb ist auf der Figur 7 nicht gezeigt.
- Fig. 8: illustriert Verfahrensschritte während eines Betriebsartenübergangs von einem parallelen Hybridbetrieb zu einem seriellen Hybridbetrieb gemäß einer Ausführungsform der vorliegenden Erfindung. Das erfindungsgemäße Abkoppeln der ersten elektrischen Maschine im parallelen Hybridbetrieb ist auf der Figur 8 nicht gezeigt.

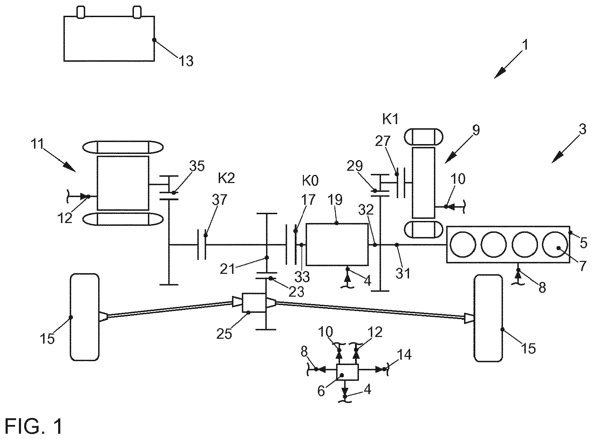

Das in **Fig. 1** schematisch illustrierte Hybridfahrzeug 1 weist eine Antriebseinrichtung 3 auf sowie eine Antriebseinrichtungssteuerung 6, welche ausgebildet ist, ein Verfahren zum Steuern der Antriebseinrichtung 3 des Hybridfahrzeuges 1 gemäß einer Ausführungsform der vorliegenden Erfindung auszuführen. Die Antriebseinrichtung 3 umfasst eine Verbrennungskraftmaschine 5 mit mehreren Zylindern 7, eine erste Elektromaschine (auch als Generator bezeichnet) 9, eine zweite Elektromaschine (auch als Traktionsmaschine bezeichnet) 11 und einen Akkumulator 13, der über nicht illustrierte Energieversorgungskabel (und Leistungselektroniken) sowohl mit der ersten Elektromaschine 9 als auch der zweiten Elektromaschine 11 verbunden ist.

Die Antriebseinrichtung 3 ist zum Antrieb des Hybridfahrzeuges 1 in drei Betriebsmodi betreibbar. Erstens in einem rein elektrischen Betrieb, in dem ein Fahrantriebsdrehmoment (welches z. B. an den Antriebsrädern 15 anliegt) mittels der zweiten Elektromaschine 11 bewirkt wird, während die Verbrennungskraftmaschine 5 ausgeschaltet ist (ihr also insbesondere kein Kraftstoff aus einem nicht illustrierten Tank zugeführt wird). Zweitens ist die Antriebseinrichtung 3 in einem seriellen Hybridbetrieb betreibbar, in dem das Fahrantriebsdrehmoment mittels der zweiten Elektromaschine 11 bewirkt wird und die Verbrennungskraftmaschine 5 die erste Elektromaschine 9 zur Erzeugung von elektrischer Energie antreibt, welche wiederum der zweiten Elektromaschine 11 zugeführt wird (entweder direkt oder über den Akkumulator 13). Die Antriebseinrichtung 3 ist drittens in einem parallelen Hybridbetrieb betreibbar, in dem ein Fahrantriebsdrehmoment mittels der Verbrennungskraftmaschine 5 bewirkt wird und insbesondere die zweite Elektromaschine 11 und/oder die erste Elektromaschine 9 abgeschaltet sind.

In dem in Fig. 1 illustrierten Hybridfahrzeug 1 umfasst die Antriebseinrichtung 3 ferner eine Hauptkupplung K0 (17) sowie ein Getriebe 19, die beide zwischen der Verbrennungskraftmaschine 5 und einem Radantriebstrang 21 angeordnet sind. Der Radantriebstrang 21 ist über ein Differenzial 25 mit dazugehöriger Differenzialübersetzung 23 mit den Antriebsrädern 15 mechanisch verbunden. Die erste Elektromaschine 9 ist über eine erste Kupplung K1 (27) und über ein erstes Übersetzungselement 29 mit einer Ausgangswelle 31 der Verbrennungskraftmaschine 5 verbunden, wobei die Ausgangswelle 31 mechanisch mit einer Eingangswelle 32 des Getriebes 19 verbunden ist. Eine Ausgangswelle 33 des Getriebes 19 ist mit der Hauptkupplung K0 (17) verbunden. Die zweite Elektromaschine 11 ist über ein zweites Übersetzungselement 35 und eine zweite Kupplung K2 (37) mit dem Radantriebstrang 21 verbunden.

In dem Hybridfahrzeug 1 wird ein seriell-paralleles Hybridkonzept umgesetzt. Über eine Skalierung des Akkumulators 13 (auch als HV-Batterie bezeichnet) bezüglich des Energieinhalts und/oder der Leistung (Entlade- und Ladeleistung) kann das Hybridfahrzeug 1 als HEV (Hybrid Electric Vehicle) als auch als ein Plug-In-HEV (PHEV) ausgeführt sein. Die erste Elektromaschine 9 (auch als EM1 bezeichnet) ist z. B. bezüglich der Leistung und des Drehmoments derart dimensioniert, dass unter Berücksichtigung des Übersetzungsverhältnisses 29 von der Verbrennungskraftmaschine 5 zur ersten Elektromaschine 9 jeder mögliche verbrennungsmotorische Betriebspunkt (auch als Arbeitspunkt bezeichnet) im seriellen Betrieb eingestellt werden kann. Die zweite Elektromaschine 11 (auch als elektrischer Fahrmotor EM2 bezeichnet) ist bspw. bezüglich der Leistungsdimensionierung an die Leistungsdimensionierung der Verbrennungskraftmaschine 5 angelehnt, das heißt, sie kann eine ähnliche maximale Leistung bereitstellen.

Für einen parallelen Hybridbetrieb können Übersetzungen von der Verbrennungskraftmaschine zum Antriebsrad 15 in verschiedenartigen Weisen bzw. Ausprägungen vorgesehen sein (z. B. gestuft oder stufenlos), wobei hier mindestens eine Over-Drive-Übersetzung mit z. B. einer typischen Übersetzung von der Verbrennungskraftmaschine 5 zum Antriebsrad 15 von z. B. i = 2,8 vorgesehen ist, was bedeutet, dass, wenn sich die Ausgangswelle 31 der Verbrennungskraftmaschine 5 2,8 mal dreht, sich das Antriebsrad 15 einmal dreht.

Die Untersetzungen von dem Fahrmotor EM2 und dem Generator EM1 können in der Ausführungsform beispielsweise sowohl als Stirnradstufe als auch über ein (festgebremstes) Planetengetriebe umgesetzt werden. Über die Hauptkupplung K0 kann der parallele Leistungspfad (Welle 33) vom Antriebsrad 15 abgekoppelt werden. Der Generator EM1 ist erfindungsgemäß über die erste Kupplung 27 (auch als K1 bezeichnet) abkoppelbar, und der Fahrmotor ist (optional) über die zweite Kupplung 37 (auch als K2 bezeichnet) abkoppelbar, um Schleppverluste zu reduzieren. Alle Kupplungen K0, K1 und K2 können beispielsweise als reibschlüssige Lammelenkupplungen und/oder formschlüssige Klauenkupplungen ausgeführt sein. Der Generator EM1 kann im Wesentlichen oder ausschließlich generatorisch arbeiten, er kann zum Start der Verbrennungskraftmaschine verwendet werden, oder er kann im parallelen Hybridbetrieb zur Boost-Unterstützung der Verbrennungskraftmaschine 5 verwendet werden. Der rein elektrische Betrieb (EV-Betrieb) und die Rekuperation können über den Fahrmotor EM2 (das heißt die zweite Elektromaschine) durchgeführt werden, während die Hauptkupplung K0 geöffnet ist und die zweite Kupplung K2 geschlossen ist.

In der folgenden Tabelle 1 sind die verschiedenen Betriebsmodi aufgeführt, in denen die Antriebseinrichtung 3 betreibbar ist, zusammen mit den jeweiligen Kopplungszuständen der Hauptkupplung K0, der ersten Kupplung K1 und der zweiten Kupplung K2.

**Tabelle 1:**

| **Betriebsmodus** | **K0** | **K1** | **K2** |
|---|---|---|---|
| EV-Betrieb | offen | beliebig | geschlossen |
| Rekuperation | offen | beliebig | geschlossen |
| Serieller Hybridbetrieb mit und ohne Lastpunktanhebung | offen | geschlossen | geschlossen |
| Paralleler Hybridbetrieb ohne Lastpunktanhebung | geschlossen | offen | offen |
| Paralleler Hybridbetrieb mit Lastpunktanhebung über EM1 | geschlossen | geschlossen | offen |
| Paralleler Hybridbetrieb mit Lastpunktanhebung über EM2 | geschlossen | offen | geschlossen |

Somit ist die Antriebseinrichtung 3 in einem rein elektrischen Betrieb (EV-Betrieb), einem seriellen Hybridbetrieb und einem parallelen Hybridbetrieb betreibbar. Sowohl der serielle Hybridbetrieb als auch der parallele Hybridbetrieb können dabei jeweils ohne oder mit Lastpunktanhebung ausgeführt werden, wie aus der obigen Tabelle 1 ersichtlich ist.

Über die direkte Anbindung der zweiten Elektromaschine 11 (EM2) an das Antriebsrad 15 sind ein effizienter elektrischer Antrieb und eine effiziente Rekuperation durchführbar.

Während des seriellen Hybridbetriebes kann auch schon bei sehr geringen Fahrzeuggeschwindigkeiten und/oder Raddrehzahlen die maximale verbrennungsmotorische Leistung zum Antrieb des Fahrzeug genutzt werden, da in diesem Fall die Hauptkupplung K0 geöffnet ist und daher die Drehzahl der Verbrennungskraftmaschine 5 unabhängig von der Fahrgeschwindigkeit optimal eingestellt werden kann. Aus dem rein elektrischen Betrieb heraus (EV-Betrieb) kann bei geöffneter Hauptkupplung K0 über die erste Elektromaschine 9 (Generator EM1) ein sehr komfortabler und zugkraftneutraler Verbrennungskraftmaschinen-Zustart erreicht werden.

Bei Bedarf einer zusätzlichen Lastpunktanhebung im parallelen Betrieb kann der dafür erforderliche generatorische Betrieb zur Erzeugung von elektrischer Leistung zur Aufladung des Akkumulators wahlweise über die zweite Elektromaschine 11 (Fahrmotor EM2) oder die erste Elektromaschine 9 (Generator EM1) durchgeführt werden. Im parallelen Hybridbetrieb ohne Bedarf einer zusätzlichen Lastpunktanhebung können in dem in Fig. 1 illustrierten Hybridfahrzeug 1 zur Minimierung der Schleppverluste die zweite Elektromaschine 11 (Fahrmotor EM2) und die erste Elektromaschine 9 (Generator EM1) durch Öffnung der zweiten Kupplung 37 (K2) und Öffnen der ersten Kupplung 27 (K1) abgekoppelt werden.

Die Auswahl des rein elektrischen Hybridbetriebs, des seriellen Hybridbetriebs und des parallelen Hybridbetriebs kann zum Zwecke der Verbrauchsminimierung die jeweiligen Effizienzen/Wirkungsgrade der Antriebsstrang-Komponenten berücksichtigen.

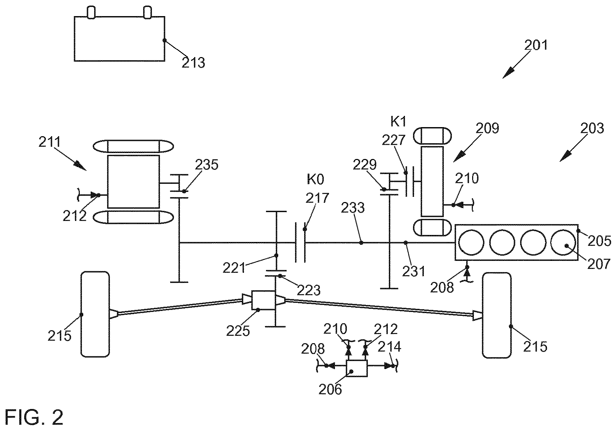

Fig. 2 illustriert ein Hybridfahrzeug 201 gemäß einer weiteren Ausführungsform der vorliegenden Erfindung, wobei in Struktur und/oder Funktion ähnliche oder gleiche Komponenten in Fig. 1 und 2 mit Bezugszeichen bezeichnet sind, welche sich in den letzten beiden Stellen gleichen. Zur Vereinfachung sind in der folgenden Beschreibung teilweise die Bezugszeichen aus beiden Fig. 1 und 2 angegeben, wobei diese jeweils durch ein Komma getrennt sind.

Das in Fig. 2 illustrierte Hybridfahrzeug 201 kann als eine "vereinfachte" Systemtopologie ohne eine Abkoppelbarkeit von Fahrmotor EM2 sowie ohne ein Getriebe (gestuft oder stufenlos) aufgefasst werden, so dass nur eine Overdrive-Übersetzung von der Verbrennungskraftmaschine 205 zu dem Antriebsrad 215 vorhanden sein kann.

Im elektrischen Betrieb ist die Hauptkupplung K0 geöffnet. Verbrennungskraftmaschine und elektrischer Generator EM1 stehen still (Drehzahl = Null). Die Fahranforderung wird über den elektrischen Fahrmotor EM2 mit entsprechender Entnahme einer elektrischen Leistung aus der HV-Batterie bereitgestellt. Der hybridische Fahrbetrieb ist seriell und parallel darstellbar. Im seriellen Hybridbetrieb ist die Hauptkupplung K0 geöffnet. Die Drehzahl der Verbrennungskraftmaschine ist frei einstellbar. Die mechanische Leistung der Verbrennungskraftmaschine wird über den Generator EM1 in eine elektrische Leistung gewandelt. Diese elektrische Leistung wird bei entsprechendem Bedarf zur Nachladung der HV-Batterie genutzt sowie vom Fahrmotor EM2 zur Darstellung der Fahranforderung genutzt.

Im parallelen Hybridbetrieb ist die Hauptkupplung K0 geschlossen. Die Drehzahl der Verbrennungskraftmaschine ist über die Overdrive-Übersetzung an die Raddrehzahl gekoppelt. Die mechanische Leistung der Verbrennungskraftmaschine wird bei entsprechendem Bedarf über einen generatorischen Betrieb des elektrischen Generators EM1 zur Nachladung der HV-Batterie genutzt sowie mechanisch zur Darstellung der Fahranforderung direkt an das Rad übertragen.

Im parallelen Hybridbetrieb ohne Bedarf einer zusätzlichen Lastpunktanhebung wird erfindungsgemäß der Generator EM1 zur Minimierung der Schleppverluste abgekoppelt (mit für Fahrer akzeptabler Dynamikeinbuße, zum Bsp. GRA- und/oder ACC-Betrieb).

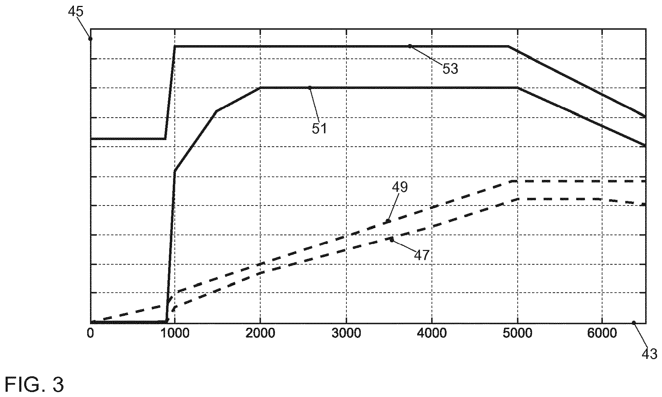

**Fig. 3** illustriert für den parallelen Hybridbetrieb in einem Koordinatensystem mit einer Abszisse 43, welche die Drehzahl der Verbrennungskraftmaschine 5, 205 in der Einheit 1/min illustriert, und mit einer Ordinate 45, welche die Leistung in der Einheit kW und/oder das Drehmoment in der Einheit Nm anzeigt, welches an der Eingangswelle 32 des Getriebes 19 bzw. einer Ausgangswelle 233 anliegt, eine Leistung 47 der Verbrennungskraftmaschine 5, 205, eine Systemleistung 49, ein Drehmoment 51 der Verbrennungskraftmaschine 5, 205 sowie ein Systemdrehmoment 53 der jeweiligen gesamten Antriebseinrichtung 3, 203. Die Systemleistung 49 und das Systemdrehmoment 53 sind unter Berücksichtigung einer elektrischen Boost-Unterstützung durch den Generator EM1 (und/oder den Fahrmotor EM2) definiert. Leistungsund Drehmomentanforderungen (das heißt Sollleistungen bzw. Solldrehmomente) oberhalb der verbrennungsmotorischen Volllast können somit im parallelen Hybridbetrieb bis zur definierten Systemleistung 49 und bis zum definierten Systemdrehmoment 53 über einen kombinierten verbrennungs- und elektromotorischen Betrieb mit entsprechender elektrischen Leistungsentnahme aus dem Akkumulator (HV-Batterie) 13, 213 dargestellt werden.

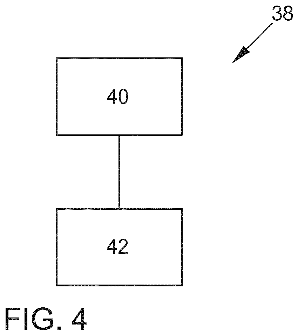

Das in Fig. 4 schematisch illustrierte Verfahren 38 zum Betreiben einer Antriebseinrichtung eines Hybridfahrzeuges gemäß einer Ausführungsform der vorliegenden Erfindung umfasst in einem Verfahrensschritt 40 ein Betreiben der Antriebseinrichtung, wie etwa der in Fig. 1 illustrierten Antriebseinrichtung 3 oder der in Fig. 2 illustrierten Antriebsvorrichtung 203, in einem ersten Betriebsmodus der folgenden drei Betriebsmodi:
einem rein elektrischen Betrieb, in dem ein auf das Antriebsrad wirkendes Fahrantriebsdrehmoment mittels der zweiten Elektromaschine bewirkt wird, während die Verbrennungskraftmaschine ausgeschaltet ist;
einem seriellen Hybridbetrieb, in dem die Verbrennungskraftmaschine die erste Elektromaschine zur Erzeugung von elektrischer Energie antreibt, welche von der zweiten Elektromaschine verwendet wird, um das Fahrantriebsdrehmoment zu bewirken;
einem parallelen Hybridbetrieb, in dem das Fahrantriebsdrehmoment mittels der Verbrennungskraftmaschine bewirkt wird.

Ferner umfasst das Verfahren 38 den Verfahrensschritt 42, welcher ein Wechseln von dem ersten Betriebsmodus in einen zweiten Betriebsmodus der drei Betriebsmodi umfasst, wobei das während des Wechsels von dem ersten Betriebsmodus in den zweiten Betriebsmodus bereitgestellte Fahrantriebsdrehmoment im Wesentlichen dem vor und nach dem Wechsel bereitgestellten Fahrantriebsdrehmoment entspricht.

Das in Fig. 1 illustrierte Motorsteuergerät 6 und das in Fig. 2 illustrierte Motorsteuergerät 206 sind dabei ausgebildet, das Verfahren 37 auszuführen. Das Motorsteuergerät 6, 206 wird bisweilen auch als Antriebseinrichtungssteuerung bezeichnet.

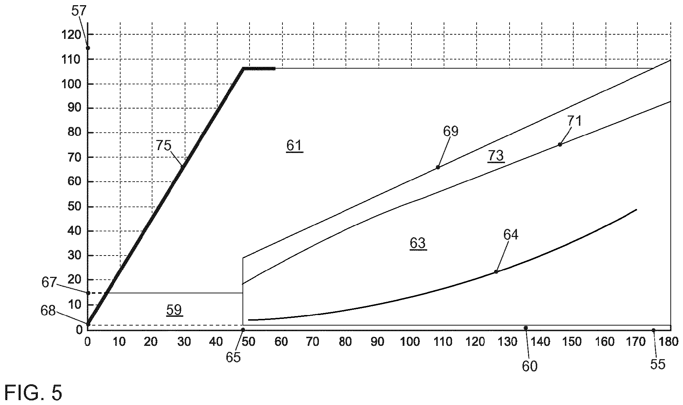

Auf der Basis der Definition von in Fig. 3 dargestellter Systemleistung und Systemdrehmoment können die verschiedenen Betriebsmodi (das heißt rein elektrischer Betrieb, serieller Hybridbetrieb und paralleler Hybridbetrieb) zum Antrieb des Hybridfahrzeuges 1, 201 in einem Diagramm von verfügbarer Antriebsleistung (und/oder Sollantriebsleistung) über Fahrzeuggeschwindigkeit (oder Antriebsraddrehzahl) visualisiert werden, wie in Fig. 5 dargestellt ist. Auf der Abszisse 55 in Fig. 5 ist die Geschwindigkeit des Hybridfahrzeuges in der Einheit km/h aufgetragen und auf der Ordinate 57 ist die (verfügbare) Antriebsleistung in der Einheit kW aufgetragen. In einem Bereich 59 und einem Bereich 60 wird der rein elektrische Betrieb (EV-Betrieb) durchgeführt, in einem Bereich 61 wird der serielle Hybridbetrieb (serieller Betrieb) durchgeführt und in einem Bereich 63 wird der parallele Hybridbetrieb (paralleler Betrieb) durchgeführt. Die Kurve 64 repräsentiert den Fahrwiderstand bei Konstantgeschwindigkeitsfahrt in der Ebene. Das in Fig. 5 dargestellte Diagramm kann analog als verfügbares Antriebsdrehmoment (anstatt von Antriebsleistung) über der Fahrzeuggeschwindigkeit oder auch der Raddrehzahl dargestellt werden.

Der rein elektrische Betrieb wird in Bereich 59 durchgeführt, falls die Fahrgeschwindigkeit unterhalb einer Fahrgeschwindigkeitsschwelle 65 liegt und die Antriebsleistung (Sollantriebsleistung) unterhalb einer Elektrischer-Betrieb-Leistungsschwelle 67 liegt.

Ferner wird der rein elektrische Betrieb in Bereich 60 durchgeführt, falls die Fahrgeschwindigkeit oberhalb der Fahrgeschwindigkeitsschwelle 65 liegt und die Antriebsleistung (Sollantriebsleistung) unterhalb einer weiteren Elektrischer-Betrieb-Leistungsschwelle 68 liegt, die kleiner ist (z. B. 3 kW) als die Elektrischer-Betrieb-Leistungsschwelle 67.

Der parallele Hybridbetrieb in dem Bereich 63 wird durchgeführt, falls sowohl die Fahrgeschwindigkeit oberhalb der Fahrgeschwindigkeitsschwelle 65 liegt, eine Sollantriebsleistung unterhalb der fahrgeschwindigkeitsabhängigen Parallelhybridbetrieb-Leistungsschwelle 69 liegt, als auch eine Sollantriebsleistung oberhalb der weiteren Elektrischer-Betrieb-Schwelle 68 liegt. Die Parallelhybridbetrieb-Leistungsschwelle 69 ist hier als die Summe der maximalen Ausgabeleistung 71 der Verbrennungskraftmaschine 5, 205 und der Boost-Unterstützung der ersten Elektromaschine 9, 209 und/oder der Boost-Unterstützung der zweiten Elektromaschine 11, 211 definiert. In dem Bereich 73 erfolgt somit im parallelen Hybridbetrieb ein Boost mittels der ersten Elektromaschine EM1 und/oder der zweiten Elektromaschine EM2.

Der serielle Hybridbetrieb wird im Bereich 61 durchgeführt, falls sowohl die Fahrgeschwindigkeit unterhalb der Fahrgeschwindigkeitsschwelle 65 liegt als auch die Sollantriebsleistung oberhalb der Elektrischer-Betrieb-Leistungsschwelle 67 liegt. Ferner wird der serielle Hybridbetrieb in dem Bereich 61 durchgeführt, falls sowohl die Fahrgeschwindigkeit oberhalb der Fahrgeschwindigkeitsschwelle 65 liegt als auch die Sollantriebsleistung oberhalb einer fahrgeschwindigkeitsabhängigen Parallelhybridbetrieb-Leistungsschwelle 69 liegt.

Der elektrische Betrieb ist bezüglich der maximalen Antriebsleistungsdarstellung zur Verbrauchsminimierung durch die Elektrischer-Betrieb-Schwelle 67 und durch die weitere Elektrischer-Betrieb-Schwelle 68 begrenzt (hier z. B.: bis ca. 49 km/h, ca. 15 kW-Antriebsleistung ab ca. 49 km/h ca. 3 kW-Antriebsleistung).

Der parallele Hybridbetrieb wird durchgeführt, sobald unter Berücksichtigung des Übersetzungsverhältnisses von Verbrennungskraftmaschine 5, 205 zum Antriebsrad 15, 215 eine minimale Drehzahl der Verbrennungskraftmaschine 5, 205 überschritten wird. In einer beispielhaften Ausführungsform ist die Overdrive-Übersetzung von der Verbrennungskraftmaschine 5, 205 zum Antriebsrad 15, 215 i = 2,8, woraus sich bei ca. 49 km/h Fahrzeuggeschwindigkeit eine Drehzahl der Verbrennungskraftmaschine 5, 205 von ca. 1200 U/min ergibt. Ab dieser Drehzahl ist die Verbrennungskraftmaschine in der Lage, selbsttätig das Antriebsdrehmoment bzw. die Antriebsleistung zu erzeugen. Der parallele Hybridbetrieb ist bezüglich der maximalen Antriebsleistungsdarstellung durch die maximale Belastung der Verbrennungskraftmaschine und unter Berücksichtigung der elektrischen Boost-Unterstützung durch den Generator EM1 und/oder den Fahrmotor EM2 durch die Systemleistung begrenzt (hier durch die Parallelhybridbetrieb-Leistungsschwelle 71 (ohne Boost) oder 69 (mit Boost)). Oberhalb der Elektrischer-Betrieb-Leistungsschwelle 67 und oberhalb der Parallelhybridbetrieb-Leistungsschwelle 69 wird der serielle Hybridbetrieb durchgeführt. Der serielle Hybridbetrieb ist bezüglich der maximalen Antriebsleistungsdarstellung durch die Dimensionierung der zweiten Elektromaschine 11, 211 (Fahrmotor EM2) durch die Linie 75 begrenzt. Die Schwellen 67, 68, 69, 71, 65 können verbrauchsoptimal bzw. CO₂-optimal bestimmt werden.

Die Herleitung einer CO₂-optimierten hybridischen Betriebsstrategie erfolgt auf Basis eines Vergleichs des konventionellen, rein verbrennungsmotorischen Antriebs mit einem intermittierenden elektrisch-verbrennungsmotorischen Fahrbetrieb. Dabei sind im Hybridbetrieb (seriell und/oder parallel) neben der Rekuperation, der Kraftstoffmehrverbrauch durch Lastpunktanhebung sowie der Energieeinsatz für das elektrische Fahren und die Motorstartvorgänge zu berücksichtigen. Das elektrische Fahren wird dann nur für einen energetisch sinnvollen Bereich zugelassen, für den der Gesamtwirkungsgrad trotz der mehrfachen, verlustbehafteten Energieumwandlung größer ist als im rein verbrennungsmotorischen Betrieb.

Der Übergang vom elektrischen Fahrbetrieb zum hybridischen Fahrbetrieb erfolgt dann, wenn die über den Pedalwert abgeleitete Fahrerwunschantriebsleistung einen vorbestimmten Wert überschreitet. Diese zusätzlich auch von der Raddrehzahl bzw. der Fahrzeuggeschwindigkeit abhängige Leistungsschwelle wird unter Anwendung eines mathematischen Optimierungsverfahrens unter Berücksichtigung aller Antriebsstrangkomponentenwirkungsgrade für verschiedene Fahrzyklen verbrauchsoptimal bestimmt.

Für das in Fig. 2 gezeigte Ausführungsbeispiel und unter Berücksichtigung typischer Komponentenwirkungsgrade kann sich bis ca. 49 km/h eine Grenzantriebsleistung von ca. 15 kW für den elektrischen Betrieb bzw. ab 50 km/h eine Grenzantriebsleistung von ca. 3 kW für den elektrischen Betrieb ergeben, ohne dass die vorliegende Erfindung auf diese Werte und Grenzen beschränkt ist.

Die drei Betriebsmodi der Antriebseinrichtung 3, 203 können dabei in verschiedenen Bereichen durchgeführt werden, welche u. a. jeweils durch die Fahrgeschwindigkeit (und/oder Antriebsraddrehzahl) und Antriebsleistung (und/oder Antriebsdrehmoment bzw. Fahrantriebsdrehmoment) definiert sind, wie es in Fig. 5 schematisch illustriert ist.

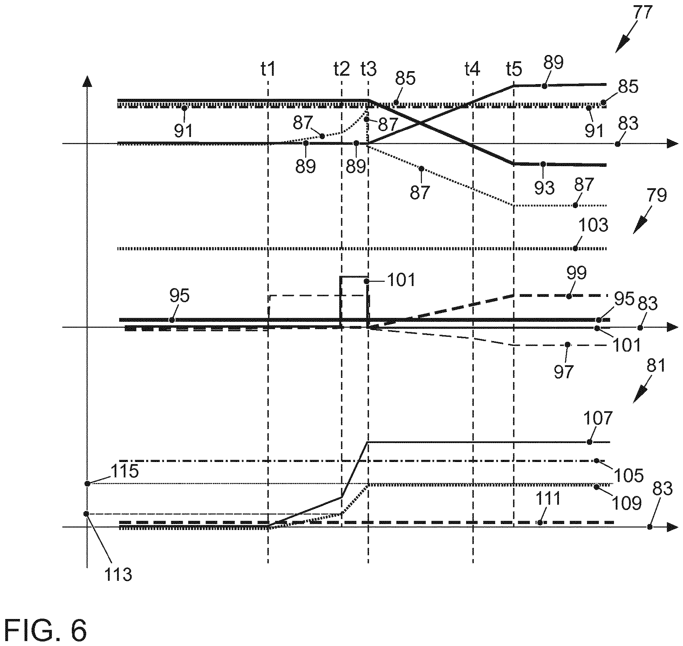

**Fig. 6** illustriert in Graphen 77, 79, 81 Kurven einer Leistung (Graph 77) in der Einheit kW, eines Drehmoments (Graph 79) in der Einheit Nm und einer Drehzahl (Graph 81) in der Einheit 1/min von Komponenten der Antriebseinrichtung 3, 203, die jeweils gegen die Zeit auf Abszisse 83 aufgetragen sind, welche bei einem Betriebsartenwechsel von einem rein elektrischen Fahrbetrieb auf den seriellen Hybridbetrieb gemäß einer Ausführungsform der vorliegenden Erfindung durchgeführt werden.

In dem Graphen 77 illustriert die Kurve 85 die Leistung der zweiten Elektromaschine 11 bzw. 211, illustriert die Kurve 87 die Leistung der ersten Elektromaschine 9 bzw. 209, illustriert die Kurve 89 die (Fahr-)Leistung der Verbrennungskraftmaschine 5 bzw. 205, illustriert die Kurve 91 die Leistung an dem Antriebsrad 15 bzw. 215 und illustriert die Kurve 93 die Leistung des Akkumulators (und/oder HV-Batterie) 13 bzw. 213. Von den jeweiligen Komponenten abgegebene Leistung ist dabei positiv und aufgenommene Leistung ist negativ.

In dem Graphen 79 illustriert die Kurve 95 das Drehmoment der zweiten Elektromaschine 11, 211, illustriert die Kurve 97 das Drehmoment der ersten Elektromaschine 9, 209, illustriert die Kurve 99 das Fahrdrehmoment der Verbrennungskraftmaschine 3, 203, illustriert die Kurve 101 das Startdrehmoment der Verbrennungskraftmaschine und illustriert die Kurve 103 das an dem Antriebsrad 15, 215 anliegende Drehmoment.

In dem Graphen 81 illustriert die Kurve 105 die Drehzahl der zweiten Elektromaschine 11 bzw. 211, illustriert die Kurve 107 die Drehzahl der ersten Elektromaschine 9, 209, illustriert die Kurve 109 die Drehzahl der Verbrennungskraftmaschine 5, 205 und illustriert die Kurve 111 die Drehzahl des Antriebsrads 15 bzw. 215.

Zeitweise deckungsgleiche (d. h. übereinander liegende) Kurven sind zur besseren Lesbarkeit (teilweise) mit geringfügigen Abständen zueinander bzgl. der Abszissen aufgetragen.

Bis zu einem ersten Zeitpunkt (t1) liegt der rein elektrische Fahrmodus (elektr. Fahren) vor, der über eine Leistungsentnahme aus dem Akkumulator (und/oder HV-Batterie) 13 bzw. 213 dargestellt wird. Bis zu diesem ersten Zeitpunkt t1 wird somit das Fahrzeug 1 bzw. 201 ausschließlich durch die zweite Elektromaschine 11 bzw. 211 angetrieben.

In dem in den Graphen 77, 79, 81 gezeigten Fall handelt es sich um einen Fahrbetrieb mit konstanter Fahrgeschwindigkeit, das heißt Raddrehzahl und Raddrehmoment (sowie in Folge dessen auch die Antriebsleistung) sind konstant. Die Hauptkupplung K0 (auch mit Bezugszeichen 17 bzw. 217 in Fig. 1 und 2 bezeichnet) ist dabei stets geöffnet. Die Einheit aus der Verbrennungskraftmaschine 5 bzw. 205 und der ersten Elektromaschine (Generator) 9 bzw. 209 steht zur Vermeidung von Schleppverlusten während des elektrischen Fahrens still. Somit ist also die Drehzahl der Verbrennungskraftmaschine 5 bzw. 205 und auch die Drehzahl der ersten Elektromaschine 9 bzw. 209 bis zum ersten Zeitpunkt t1 gleich Null.

Der Startablauf (VM-Zustart) beginnt zum Zeitpunkt t1 von einem vom Hybridkoordinator gegebenen Startkommando. Die Steuerung der ersten Elektromaschine 9 bzw. 209 stellt ein Drehmoment an der ersten Elektromaschine 9 bzw. 209 ein und hebt damit die Drehzahl der Einheit aus der Verbrennungskraftmaschine 5 bzw. 205 und der ersten Elektromaschine 9 bzw. 209 an, bis zu einem zweiten Zeitpunkt t2 eine Drehzahl der Verbrennungskraftmaschine 5 bzw. 205 von ca. 200 U/min eingestellt ist. Andere Werte sind möglich. Die Drehzahl der Verbrennungskraftmaschine 5 bzw. 205 wird so bis zum zweiten Zeitpunkt t2 auf eine Drehzahl gebracht, welche einer Startdrehzahlschwelle 113 entspricht und/oder gleicht. Falls die Drehzahl der Verbrennungskraftmaschine 5 bzw. 205 die Startdrehzahlschwelle 113 erreicht oder übersteigt, kann die Verbrennungskraftmaschine 5 bzw. 205 darüber hinaus selbst über die eigene Kraftstoffeinspritzung und der damit einhergehenden Darstellung eines Startmoments zur weiteren Drehzahlanhebung der Einheit aus Verteilungskraftmaschine 5 bzw. 205 und erster Elektromaschine 9 bzw. 209 beitragen. Das effektive Verbrennungskraftmaschine-Drehmoment an der Kurbelwelle zum Antrieb des Hybridfahrzeuges bleibt dabei Null.

In einer alternativen Ausführungsform kann auch zwischen dem zweiten Zeitpunkt t2 und dem dritten Zeitpunkt t3 das Drehmoment der ersten Elektromaschine 9 bzw. 209 reduziert werden oder völlig auf Null gesetzt werden und so die Drehzahlanhebung der Einheit aus Verbrennungskraftmaschine 5 bzw. 205 und erster Elektromaschine 9 bzw. 209 ausschließlich über die Kraftstoffeinspritzung der Verbrennungskraftmaschine umgesetzt werden.

Zu einem dritten Zeitpunkt t3 hat die Verbrennungskraftmaschine 5 bzw. 205 eine Zieldrehzahl 115 für den seriellen Betrieb erreicht. In Folge dessen kann das Drehmoment der ersten Elektromaschine 9 bzw. 209 sowie das Startmoment des Verbrennungsmotors bzw. der Verbrennungskraftmaschine 5 bzw. 205 zur Drehzahlanhebung der Einheit aus Verbrennungskraftmaschine 5 bzw. 205 und erster Elektromaschine 9 bzw. 209 zurückgenommen werden.

Ab dem dritten Zeitpunkt t3 findet eine Leistungsüberblendung statt, die die geforderte Antriebsleistung von dem Akkumulator 13 bzw. 213 (und/oder HV-Batterie) auf die Verbrennungskraftmaschine 5 bzw. 205 überführt. Die Verbrennungskraftmaschine 5 bzw. 205 baut dabei effektives Drehmoment (sowie in Folge dessen verbrennungsmotorische Leistung) auf. Die verbrennungsmotorische Leistung wird über einen entsprechenden Drehmomentaufbau an der ersten Elektromaschine 9 bzw. 209 in elektrische Energie gewandelt, die unmittelbar auf die zweite Elektromaschine (Traktionsmaschine) 11 bzw. 211 zur Darstellung und/oder Erzeugung der Radantriebsleistung bzw. zur Darstellung der geforderten Fahrantriebsleistung übertragen wird. Entsprechend kann die Leistungsentnahme aus der HV-Batterie 13 bzw. 213 zur Darstellung der geforderten Antriebsleistung sukzessive auf Null reduziert werden, bis zu einem vierten Zeitpunkt t4 die geforderte Antriebsleistung ausschließlich durch die Verbrennungskraftmaschine 5 bzw. 205 bereitgestellt wird. Der Betriebsartenwechsel von dem rein elektrischen Betrieb auf den seriellen Hybridbetrieb kann zu einem vierten Zeitpunkt t4 abgeschlossen sein. Ab dem vierten Zeitpunkt t4 liegt daher der Betriebsmodus serieller Hybridbetrieb vor.

In dem in Fig. 6 illustrierten Ausführungsbeispiel wird der Drehmomentaufbau an der Verbrennungskraftmaschine 5 bzw. 205 sowie der entsprechende Drehmomentaufbau an der ersten Elektromaschine 9 bzw. 209 ab dem vierten Zeitpunkt t4 bis zu einem fünften Zeitpunkt t5 fortgesetzt. Der damit einhergehende und über die geforderte Antriebsleistung hinausgehende Leistungsaufbau an der Verbrennungskraftmaschine 5 bzw. 205 wird über die erste Elektromaschine 9 bzw. 209 in den Akkumulator 13 bzw. 213 zur Darstellung einer Lastpunktanhebung (Nachladung des Akkumulators 13 bzw. 213) überführt (serieller Hybridantrieb mit Lastpunktanhebung ab t5).

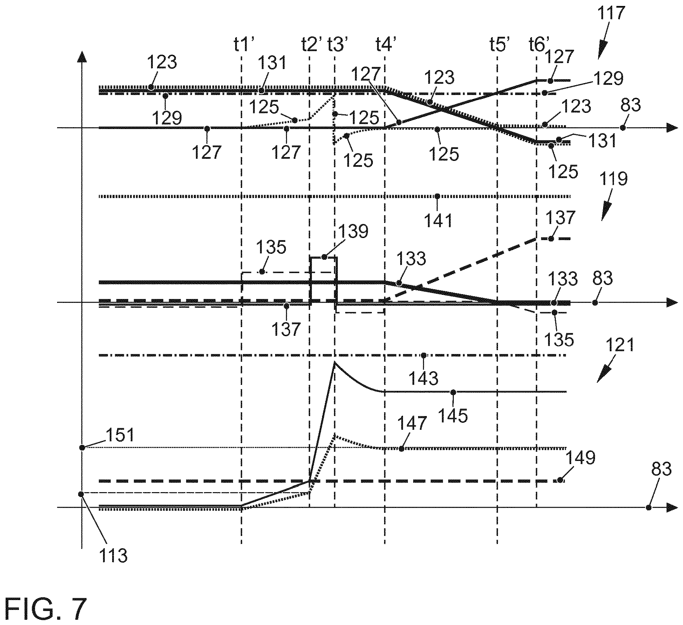

Während des gesamten Vorgangs bleibt die Hauptkupplung K0, auch als Trennkupplung bezeichnet, stets geöffnet. Weiterhin bleiben die Antriebsraddrehzahl und das Antriebsradmoment (sowie in Folge dessen auch die Antriebsradleistung) während des gesamten Vorgangs konstant, so dass der Betriebsartenwechsel von dem rein elektrischen Betrieb in den seriellen Hybridbetrieb ohne Zugkraftunterbrechung durchgeführt werden kann. Der gesamte Vorgang kann eine Zeitdauer von ca. 0,2 bis 0,5 Sekunden (Zeitdauer von dem ersten Zeitpunkt t1 bis zum fünften Zeitpunkt t5) andauern und/oder 0,5 Sekunden nicht überschreiten und kann daher sehr schnell umgesetzt werden. **Fig. 7** illustriert Graphen 117, 119, 121, welche Leistung in der Einheit kW, Drehmoment in der Einheit Nm und Drehzahl in der Einheit 1/min gegen die Zeit (Abszisse 83) während eines Betriebsartenwechsels von einem rein elektrischen Fahren zu einem parallelen Hybridbetrieb gemäß einer Ausführungsform der vorliegenden Erfindung illustrieren. Das erfindungsgemäße Abkoppeln der ersten elektrischen Maschine im parallelen Hybridbetrieb ist auf der Figur 7 nicht gezeigt.

In dem Graphen 117 illustriert eine Kurve 123 die Leistung der zweiten Elektromaschine 11 bzw. 211, illustriert eine Kurve 125 die Leistung der ersten Elektromaschine 9 bzw. 209, illustriert eine Kurve 127 die (Fahr-)Leistung der Verbrennungskraftmaschine 5 bzw. 205, illustriert eine Kurve 129 die Leistung an dem Antriebsrad 15 bzw. 215 und illustriert eine Kurve 131 die Leistung des Akkumulators 13 bzw. 213.

In dem Graphen 119 illustriert eine Kurve 133 das Drehmoment der zweiten Elektromaschine 11 bzw. 211, illustriert eine Kurve 135 das Drehmoment der ersten Elektromaschine 9 bzw. 209, illustriert eine Kurve 137 ein Fahrdrehmoment der Verbrennungskraftmaschine 5 bzw. 205, illustriert eine Kurve 139 ein Startmoment der Verbrennungskraftmaschine 5, 205 und illustriert eine Kurve 141 ein Antriebsdrehmoment des Antriebsrads 15 bzw. 215.

In dem Graphen 121 illustriert eine Kurve 143 die Drehzahl der zweiten Elektromaschine 11 bzw. 211, illustriert eine Kurve 145 eine Drehzahl der ersten Elektromaschine 9 bzw. 209, illustriert eine Kurve 147 eine Drehzahl der Verbrennungskraftmaschine 9 bzw. 209 und illustriert eine Kurve 149 eine Drehzahl des Antriebsrads 15 bzw. 215.

Zeitweise deckungsgleiche (d. h. übereinander liegende) Kurven sind zur besseren Lesbarkeit (teilweise) mit geringfügigen Abständen zueinander bzgl. der Abszissen aufgetragen.

Bis zu einem weiteren ersten Zeitpunkt t1' liegt der rein elektrische Betrieb (elektr. Fahren) vor, der über eine Leistungsentnahme aus dem Akkumulator 13 bzw. 213 dargestellt wird. In dem gezeigten Fall handelt es sich um eine Fahrbetrieb mit konstanter Fahrgeschwindigkeit, das heißt Antriebsraddrehzahl und Antriebsradmoment (sowie im Folge dessen auch die Antriebsradleistung) sind konstant. Die Hauptkupplung K0, auch als Trennkupplung bezeichnet, ist bis zu einem weiteren vierten Zeitpunkt t4' geöffnet, ab dem weiteren vierten Zeitpunkt t4' geschlossen. Die Einheit aus Verbrennungskraftmaschine und erster Elektromaschine 9 bzw. 209 steht zur Vermeidung von Schleppverlusten während des rein elektrischen Betriebs still. Somit sind also die Drehzahl der Verbrennungskraftmaschine 5 bzw. 205 sowie auch die Drehzahl der ersten Elektromaschine 9 bzw. 209 gleich Null.

Der Startablauf (VM-Zustart) beginnt zu einem weiteren Zeitpunkt t1' mit einem vom Hybridkoordinator gegebenen Startkommando. Die Steuerung der ersten Elektromaschine 9 bzw. 209 stellt ein Drehmoment an der ersten Elektromaschine 9 bzw. 209 ein und hebt damit die Drehzahlen der Einheit aus Verbrennungskraftmaschine 5 bzw. 205 und der ersten Elektromaschine 9 bzw. 209 an, bis bei einem weiteren zweiten Zeitpunkt t2' die Drehzahl der Verbrennungskraftmaschine 5, 205 eine Startdrehzahlschwelle 113 erreicht ist. Die Startdrehzahlschwelle 113 kann z. B. ca. 200 U/min betragen. Andere Werte sind möglich. Ab einer solchen Startdrehzahlschwelle kann die Verbrennungskraftmaschine 5, 205 selbst über eine eigene Kraftstoffeinspritzung und der damit einhergehenden Darstellung eines Startmoments zur weiteren Drehzahlanhebung der Einheit aus Verbrennungskraftmaschine 5 bzw. 205 und erster Elektromaschine 9 bzw. 209 beitragen. Das effektive Verbrennungskraftmaschine-Drehmoment an der Kurbelwelle zum Antrieb des Hybridfahrzeuges bleibt dabei Null.

In einer anderen Ausführungsform ist es möglich, zwischen dem weiteren zweiten Zeitpunkt t2' und dem weiteren dritten Zeitpunkt t3' das Drehmoment der ersten Elektromaschine 9 bzw. 209 zu reduzieren oder völlig auf Null zu setzen und so die Drehzahlanhebung der Einheit aus Verbrennungskraftmaschine 5 bzw. 205 und erster Elektromaschine 9 bzw. 209 ausschließlich über die Kraftstoffeinspritzung der Verbrennungskraftmaschine 5 bzw. 205 umzusetzen.

Zu einem weiteren dritten Zeitpunkt t3' erreicht die Verbrennungskraftmaschine 5 bzw. 205 eine Drehzahl, die typischerweise etwas höher als eine Zieldrehzahl 151 für den parallelen Hybridbetrieb ist. In Folge dessen kann das Drehmoment der ersten Elektromaschine 9 bzw. 209 sowie das Startmoment der Verbrennungskraftmaschine 5 bzw. 205 zur Drehzahlanhebung der Einheit aus Verbrennungskraftmaschine 5 bzw. 205 und erster Elektromaschine 9 bzw. 209 zurückgenommen werden. Zudem schließt sich bis zu einem weiteren vierten Zeitpunkt t4' ein generatorischer Betrieb der ersten Elektromaschine 9 bzw. 209 an, der die Drehzahl der Verbrennungskraftmaschine 5 bzw. 205 in die Zieldrehzahl für den parallelen Hybridbetrieb 151 überführt.

Zu dem weiteren vierten Zeitpunkt t4' wird die Hauptkupplung K0 geschlossen. Im Anschluss an das Schließen der Hauptkupplung K0 findet eine Leistungsüberblendung (Momentenüberblendung) statt, die die geforderte Antriebsleistung von dem Akkumulator 13 bzw. 213 auf die Verbrennungskraftmaschine 5 bzw. 205 überführt. Der Verbrennungsmotor bzw. die Verbrennungskraftmaschine 5 bzw. 205 baut dabei effektives Drehmoment (sowie in Folge dessen auch verbrennungsmotorische Leistung) auf, das unmittelbar über die Hauptkupplung K0 zur Darstellung des Antriebsradmoments (bzw. zur Darstellung der geforderten Antriebsradleistung) mechanisch an das Antriebsrad 15 bzw. 215 übertragen wird. Entsprechend kann die Leistungsentnahme aus dem Akkumulator 13 bzw. 213 zur Darstellung der geforderten Antriebsleistung sukzessive auf Null reduziert werden, bis zu einem weiteren Zeitpunkt t5' die geforderte Antriebsleistung ausschließlich durch die Verbrennungskraftmaschine 5 bzw. 205 bereitgestellt wird. Der Betriebsartenwechsel von dem rein elektrischen Betrieb auf den parallelen Hybridbetrieb ist dabei zum weiteren fünften Zeitpunkt t5' abgeschlossen. Ab dem weiteren fünften Zeitpunkt t5' liegt daher der Betriebsmodus paralleler Hybridbetrieb vor.

In dem in Fig. 7 illustrierten Ausführungsbeispiel wird der Drehmomentaufbau am Verbrennungsmotor bzw. an der Verbrennungskraftmaschine 5 bzw. 205 (einhergehend mit einem entsprechenden Drehmomentaufbau an der ersten Elektromaschine 9 bzw. 209) ab dem weiteren fünften Zeitpunkt t5' bis zum weiteren Zeitpunkt t6' fortgesetzt. Der damit resultierende über die geforderte Antriebsleistung hinausgehende Leistungsaufbau an der Verbrennungskraftmaschine wird über die erste Elektromaschine 9 bzw. 209 in den Akkumulator 13 bzw. 213 zur Darstellung einer Lastpunktanhebung (Nachladung des Akkumulators 13 bzw. 213) überführt (paralleler Hybridbetrieb mit Lastpunktanhebung ab t5').

Während des gesamten Vorgangs bleiben Antriebsraddrehzahl und Antriebsraddrehmoment (sowie in Folge dessen auch die Antriebsradleistung) konstant, so dass der Betriebsartenwechsel von dem rein elektrischen Betrieb auf den parallelen Hybridantrieb ohne Zugkraftunterbrechung durchgeführt werden kann. Der gesamte Vorgang wird in der Regel eine Zeitdauer von ca. 0,2 bis 0,5 Sekunden (Zeitdauer von dem weiteren ersten Zeitpunkt t1' bis zu dem weiteren sechsten Zeitpunkt t6') nicht überschreiten und kann daher sehr schnell umgesetzt werden.

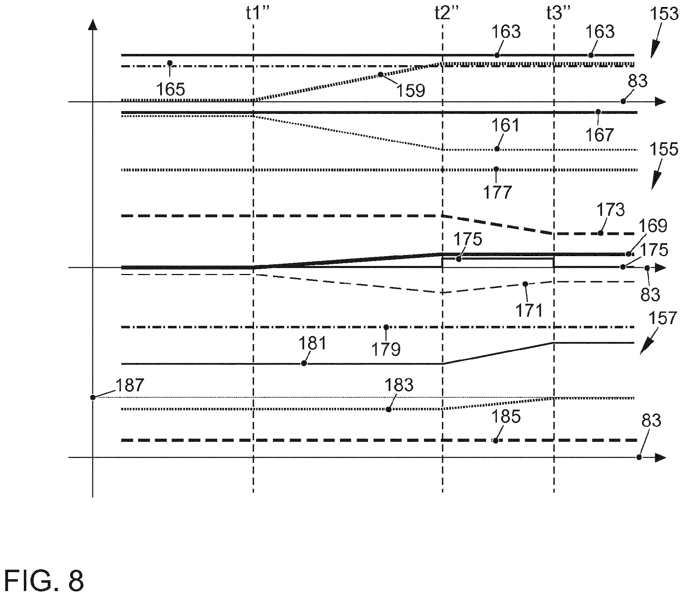

**Fig. 8** illustriert Graphen 153, 155, 157, wobei eine Leistung in der Einheit kW, ein Drehmoment in der Einheit Nm und eine Drehzahl in der Einheit 1/min gegen die Zeit (Abszisse 83) während eines Betriebsartenwechsels von einem parallelen Hybridbetrieb zu einem seriellen Hybridbetrieb gemäß einer Ausführungsform der vorliegenden Erfindung dargestellt sind.

Das erfindungsgemäße Abkoppeln der ersten elektrischen Maschine im parallelen Hybridbetrieb ist auf der Figur 8 nicht gezeigt.

Dabei illustriert eine Kurve 159 in dem Graphen 153 eine Leistung der zweiten Elektromaschine 11 bzw. 211, illustriert eine Kurve 161 eine Leistung der ersten Elektromaschine 9 bzw. 209, illustriert eine Kurve 163 eine (Fahr-)Leistung der Verbrennungskraftmaschine 5 bzw. 205, illustriert eine Kurve 165 eine Antriebsleistung an dem Antriebsrad 15 bzw. 215 und illustriert eine Kurve 167 eine Leistung des Akkumulators 13 bzw. 213.

In dem Graphen 155 illustriert eine Kurve 169 ein Drehmoment der zweiten Elektromaschine 11 bzw. 211, illustriert eine Kurve 171 ein Drehmoment der ersten Elektromaschine 9 bzw. 209, illustriert eine Kurve 173 ein Fahrdrehmoment der Verbrennungskraftmaschine 5 bzw. 205, illustriert eine Kurve 175 ein Moment zur Drehzahlanhebung der Verbrennungskraftmaschine 5 bzw. 205 und illustriert eine Kurve 177 ein Antriebsdrehmoment an dem Antriebsrad 15 bzw. 215.

In dem Graphen 157 illustriert eine Kurve 179 eine Drehzahl der zweiten Elektromaschine 11 bzw. 211, illustriert eine Kurve 181 eine Drehzahl der ersten Elektromaschine 9 bzw. 209, illustriert eine Kurve 183 eine Drehzahl der Verbrennungskraftmaschine 5 bzw. 205 und illustriert eine Kurve 185 eine Drehzahl des Antriebsrads 15 bzw. 215.

Zeitweise deckungsgleiche (d. h. übereinander liegende) Kurven sind zur besseren Lesbarkeit (teilweise) mit geringfügigen Abständen zueinander bzgl. der Abszissen aufgetragen.

Bis zu einem noch weiteren Zeitpunkt t1" liegt der Betriebsmodus paralleler Hybridbetrieb (mit Lastpunktanhebung in dem in Fig. 8 illustrierten Ausführungsbeispiel) vor, der über die Verbrennungskraftmaschine dargestellt wird. In dem in Fig. 8 illustrierten Ausführungsbeispiel handelt es sich um einen Fahrbetrieb mit konstanter Fahrgeschwindigkeit, das heißt Antriebsraddrehzahl und Antriebsraddrehmoment (sowie in Folge dessen auch die Antriebsradleistung) sind konstant. Die Hauptkupplung K0, auch als Trennkupplung bezeichnet, ist bis zu einem noch weiteren zweiten Zeitpunkt t2" geschlossen, ab dem noch weiteren zweiten Zeitpunkt t2" geöffnet. Die Einheit aus der Verbrennungskraftmaschine 5, 205 und erster Elektromaschine 9 bzw. 209 sind bezüglich ihrer Drehzahlen gemäß des parallelen Übersetzungsverhältnisses Verbrennungskraftmaschine 5, 205 zu Antriebsrad (bzw. erster Elektromaschine 9 bzw. 209 zu Antriebsrad 15 bzw. 215) mechanisch fest an das Antriebsrad 15 bzw. 215 gekoppelt. Die geforderte Antriebsleistung (sowie die zusätzliche Nachladeleistung für den Akkumulator 13 bzw. 213) werden durch die Verbrennungskraftmaschine 5, 205 bereitgestellt. Die erste Elektromaschine 9 bzw. 209 stellt dabei ein generatorisches Drehmoment zur Umsetzung der Lastpunktanhebung (Nachladung des Akkumulators 13 bzw. 213) bereit.

Der Betriebsartenwechsel von dem parallelen Hybridbetrieb zu dem seriellen Hybridbetrieb beginnt zu einem noch weiteren ersten Zeitpunkt t1" mit einem vom Hybridkoordinator gegebenen Kommando zum Betriebsartenwechsel. Dazu wird bis zu einem noch weiteren zweiten Zeitpunkt t2" zunächst der parallele Hybridbetrieb auf einen seriellen Hybridbetrieb umgelagert (leistungsverzweigter Hybridbetrieb). Die Steuerung der ersten Elektromaschine 9 bzw. 209 baut dabei kontinuierlich zusätzliches generatorisches Drehmoment auf. Entsprechend dem zusätzlichen Drehmomentaufbau an der ersten Elektromaschine 9 bzw. 209 kann dann kontinuierlich verbrennungsmotorische Leistung in elektrische Leistung gewandelt werden, die (unter Beibehaltung der optionalen Nachladung des Akkumulators 13 bzw. 213) unmittelbar auf den Fahrmotor zur Darstellung der Radleistung bzw. zur Darstellung der geforderten Antriebsleistung übertragen wird. In Folge dessen kann die mechanische Leistungsübertragung über die Hauptkupplung K0 zur Darstellung der geforderten Antriebsleistung sukzessive auf Null reduziert werden, bis zu dem noch weiteren zweiten Zeitpunkt t2" die geforderte Antriebsleistung ausschließlich über einen seriellen Hybridbetrieb (mit Lastpunktanhebung) bereitgestellt wird. In anderen Ausführungsformen kann der Betriebsartenwechsel ohne die optional mögliche Lastpunktanhebung durchgeführt werden.

Zu dem noch weiteren zweiten Zeitpunkt t2" ist die Hauptkupplung K0 vollständig lastfrei und kann daher geöffnet werden. Nach dem Öffnen der Hauptkupplung K0 wird die Drehzahl der Verbrennungskraftmaschine 5 bzw. 205 in die Zieldrehzahl 187 für den seriellen Hybridbetrieb überführt (Betriebspunkteinstellung VM). Dazu stellt in dem in Fig. 8 illustrierten Ausführungsbeispiel die Verbrennungskraftmaschine 5, 205 über die eigene Kraftstoffeinspritzung zusätzliches Drehmoment zur Darstellung einer Drehzahlanhebung der Einheit aus Verbrennungskraftmaschine 5 bzw. 205 und erster Elektromaschine 9 bzw. 209 bereit. Zu einem noch weiteren dritten Zeitpunkt t3" hat sich die Zieldrehzahl der Verbrennungskraftmaschine für den seriellen Hybridbetrieb mit entsprechend geänderten Drehmomenten von Verbrennungskraftmaschine 5 bzw. 205 und erster Elektromaschine 9 bzw. 209 eingestellt. Das erforderliche Verbrennungskraftmaschine-Drehmoment zur Drehzahlanhebung kann wieder zurückgenommen werden. Der Betriebsartenwechsel von einem parallelen Hybridantrieb auf einen seriellen Hybridantrieb ist zu dem noch weiteren dritten Zeitpunkt t3" abgeschlossen. Ab dem noch weiteren dritten Zeitpunkt t3" liegt daher der Betriebsmodus serieller Hybridbetrieb (mit Lastpunktanhebung) vor.

Während des gesamten Vorgangs des Betriebsartenwechsel von dem parallelen Hybridbetrieb zu dem seriellen Hybridbetrieb bleiben Antriebsraddrehzahl und Antriebsraddrehmoment (sowie in Folge dessen auch die Antriebsradleistung) konstant, so dass der Betriebsartenwechsel von dem parallelen Hybridbetrieb zu dem seriellen Hybridbetrieb ohne eine Zugkraftunterbrechung durchgeführt werden kann. Der gesamte Vorgang wird in der Regel eine Zeitdauer von ca. 0,2 bis 0,5 Sekunden (Zeitdauer von dem noch weiteren ersten Zeitpunkt t1" bis zu dem noch weiteren dritten Zeitpunkt t3") nicht überschreiten und kann daher sehr schnell umgesetzt werden.

Die in Fig. 6 und/oder 7 und/oder 8 illustrierten Schritte zum Durchführen eines Wechsels von einem ersten Betriebsmodus zu einem zweiten Betriebsmodus können in dem in Fig. 1 oder 2 illustrierten Hybridfahrzeugen (z. B. in irgendeiner Ordnung nacheinander) durchgeführt werden.

### Bezugszeichenliste

- 1: Hybridfahrzeug
- 3: Antriebseinrichtung
- 5: Verbrennungskraftmaschine
- 6: Antriebseinrichtungssteuerung
- 7: Zylinder
- 8: Steuersignal
- 9: erste Elektromaschine
- 10: Steuersignal
- 11: zweite Elektromaschine
- 12: Steuersignal
- 13: Akkumulator
- 14: Steuersignal
- 15: Antriebsrad
- 17: Hauptkupplung K0
- 19: Getriebe
- 21: Radantriebstrang
- 23: Differenzialübersetzung
- 25: Differenzial
- 27: erste Kupplung K1
- 29: Übersetzungselement
- 31: Ausgangswelle Verbrennungskraftmaschine
- 32: Eingangswelle Getriebe
- 33: Ausgangswelle Getriebe
- 35: Übersetzungselement
- 37: zweite Kupplung K2
- 38: Verfahren
- 40: Verfahrensschritt
- 42: Verfahrensschritt
- 43: Abszisse
- 45: Ordinate
- 47: Verbrennungskraftmaschine-Leistung
- 49: Systemleistung
- 51: Verbrennungskraftmaschine-Drehmoment
- 53: Systemdrehmoment
- 55: Abszisse
- 57: Ordinate
- 59, 60: Bereiche rein elektrischen Betriebs
- 61: Bereich serieller Hybridbetrieb
- 63: Bereich paralleler Hybridbetrieb
- 64: Fahrwiderstand bei Konstantgeschwindigkeitsfahrt
- 65: Fahrgeschwindigkeitsschwelle
- 67: Elektrischer-Betrieb-Schwelle
- 68: weitere Elektrischer-Betrieb-Schwelle
- 69: Parallelhybridbetrieb-Schwelle
- 71: maximale Ausgangsleistung der Verbrennungskraftmaschine
- 73: Boost-Bereich
- 75: obere Grenze für den seriellen Hybridbetrieb
- 77: Graph
- 79: Graph
- 81: Graph
- 83: Abszisse
- 85: Leistungskurve
- 87: Leistungskurve
- 89: Leistungskurve
- 91: Leistungskurve
- 93: Leistungskurve
- 95: Drehmomentkurve
- 97: Drehmomentkurve
- 99: Drehmomentkurve
- 101: Drehmomentkurve
- 103: Drehmomentkurve
- 105: Drehzahlkurve
- 107: Drehzahlkurve
- 109: Drehzahlkurve
- 111: Drehzahlkurve
- 113: Startdrehzahlschwelle
- 115: Zieldrehzahl serieller Hybridbetrieb
- 117: Graph
- 119: Graph
- 121: Graph
- 123: Leistungskurve
- 125: Leistungskurve
- 127: Leistungskurve
- 129: Leistungskurve
- 131: Leistungskurve
- 133: Drehmomentkurve
- 135: Drehmomentkurve
- 137: Drehmomentkurve
- 139: Drehmomentkurve
- 141: Drehmomentkurve
- 143: Drehzahlkurve
- 145: Drehzahlkurve
- 147: Drehzahlkurve
- 149: Drehzahlkurve
- 151: Zieldrehzahl für den parallelen Hybridbetrieb
- 153: Graph
- 155: Graph
- 157: Graph
- 159: Leistungskurve
- 161: Leistungskurve
- 163: Leistungskurve
- 165: Leistungskurve
- 167: Leistungskurve
- 169: Drehmomentkurve
- 173: Drehmomentkurve
- 175: Drehmomentkurve
- 177: Drehmomentkurve
- 179: Drehzahlkurve
- 181: Drehzahlkurve
- 183: Drehzahlkurve
- 185: Drehzahlkurve
- 187: Zieldrehzahl für den seriellen Hybridbetrieb

## Patentansprüche

1. Verfahren zum Betreiben einer Antriebseinrichtung (3, 203) eines Hybridfahrzeuges (1, 201) zum Antreiben eines Antriebsrads (15, 215), wobei die Antriebseinrichtung eine Verbrennungskraftmaschine (5, 205), eine mit der Verbrennungskraftmaschine gekoppelte erste Elektromaschine (9, 209), eine zweite Elektromaschine (11, 211), einen elektrischen Akkumulator (13, 213) und eine Hauptkupplung (17, K0) zwischen der Verbrennungskraftmaschine (5, 205) und dem Antriebsrad (15, 215) umfasst, wobei das Verfahren aufweist:
Betreiben der Antriebseinrichtung (3, 203) in einem ersten Betriebsmodus der folgenden drei Betriebsmodi:
einem rein elektrischen Betrieb, in dem ein auf das Antriebsrad (15, 215) wirkendes Fahrantriebsdrehmoment mittels der zweiten Elektromaschine (11, 211) bewirkt wird, während die Verbrennungskraftmaschine (5, 205) ausgeschaltet ist;
einem seriellen Hybridbetrieb, in dem die Verbrennungskraftmaschine (5, 205) die erste Elektromaschine (9, 209) zur Erzeugung von elektrischer Energie antreibt, welche von der zweiten Elektromaschine (11, 211) verwendet wird, um das
Fahrantriebsdrehmoment zu bewirken;
einem parallelen Hybridbetrieb, in dem das Fahrantriebsdrehmoment mittels der Verbrennungskraftmaschine (5, 205) bewirkt wird;
und zumindest einmal Wechseln von dem ersten Betriebsmodus in einen zweiten Betriebsmodus der drei Betriebsmodi, wobei das während des Wechsels von dem ersten Betriebsmodus in den zweiten Betriebsmodus bereitgestellte Fahrantriebsdrehmoment einem geeignet wählbaren Verlauf zwischen dem vor und nach dem Wechsel bereitgestellten Fahrantriebsdrehmoment entspricht,
**dadurch gekennzeichnet, dass** das Betreiben der Antriebseinrichtung (3, 203) in dem parallelen Hybridbetrieb den folgenden Verfahrensschritt aufweist: Öffnen einer ersten Kupplung (27, K1) der Antriebseinrichtung (3, 203), die zwischen der ersten Elektromaschine (9, 209) und der Verbrennungskraftmaschine (5, 205) angeordnet ist.

2. Verfahren gemäß Anspruch 1, wobei der erste Betriebsmodus der rein elektrische Betrieb ist und der zweite Betriebsmodi der serielle Hybridbetrieb ist, wobei das Wechseln aufweist:
bis zu einem ersten Zeitpunkt (t1) Betreiben der zweiten Elektromaschine (11, 211) im elektromotorischen Betrieb mit elektrischer Energie aus dem Akkumulator (13, 213);
ab dem ersten Zeitpunkt (t1) und zumindest bis zu einem zweiten Zeitpunkt (t2), ab dem eine Drehzahl der Verbrennungskraftmaschine (5, 205) eine Startdrehzahlschwelle (113) erreicht oder übersteigt, Betreiben der ersten Elektromaschine (9, 209) im elektromotorischen Betrieb zum Erzeugen eines Drehmoments, um eine Drehzahl der Verbrennungskraftmaschine (5, 205) zu erhöhen;
ab dem zweiten Zeitpunkt (t2) Zuführen von Kraftstoff an die Verbrennungskraftmaschine (5, 205);
ab einem dritten Zeitpunkt (t3), bei dem die Drehzahl der Verbrennungskraftmaschine (5, 205) eine Zieldrehzahl für den seriellen Betrieb erreicht oder übersteigt, Betreiben der ersten Elektromaschine (9, 209) im generatorischen Betrieb zum Erzeugen von elektrischer Energie;
zwischen dem dritten Zeitpunkt (t3) und einem vierten Zeitpunkt (t4) Betreiben der zweiten Elektromaschine (11, 211) im elektromotorischen Betrieb durch zeitlich abnehmende Zuführung von elektrischer Energie aus dem Akkumulator (13, 213) und zeitlich zunehmende Zuführung von mittels der Verbrennungskraftmaschine (5, 205) über die erste Elektromaschine (9, 209) erzeugter elektrischer Energie; und
ab dem vierten Zeitpunkt (t4) Betreiben der zweiten Elektromaschine (11, 211) im elektromotorischen Betrieb mit elektrischer Energie, die über die erste Elektromaschine (9, 209) mittels der Verbrennungskraftmaschine (5, 205) erzeugt wird.

3. Verfahren gemäß Anspruch 2, wobei das Verfahren ferner aufweist:
zwischen dem vierten Zeitpunkt (t4) und einem fünften Zeitpunkt (t5) Erhöhen der Leistungsabgabe der Verbrennungskraftmaschine (5, 205) auf eine Sollleistung, die um eine Lastpunkterhöhungsleistung oberhalb einer Sollantriebsleistung liegt, und ab dem fünften Zeitpunkt (t5) Laden des Akkumulators (13, 213) mit einer der Lastpunkterhöhungsleistung entsprechenden Ladeleistung.

4. Verfahren gemäß einem der vorangehenden Ansprüche, wobei der erste Betriebsmodus der rein elektrische Betrieb ist und der zweite Betriebsmodus der parallele Hybridbetrieb ist, wobei das Wechseln aufweist:
bis zu einem weiteren vierten Zeitpunkt (t4') Offenhalten der Hauptkupplung (17, K0);
bis zu einem weiteren ersten Zeitpunkt (t1') Betreiben der zweiten Elektromaschine (11, 211) im elektromotorischen Betrieb mit elektrischer Energie aus dem Akkumulator (13, 213);
ab dem weiteren ersten Zeitpunkt (t1') und zumindest bis zu einem weiteren zweiten Zeitpunkt (t2'), ab dem eine Drehzahl der Verbrennungskraftmaschine (5, 205) eine Startdrehzahlschwelle erreicht oder übersteigt, Betreiben der ersten Elektromaschine (9, 209) im elektromotorischen Betrieb zum Erzeugen eines Drehmoments, um eine Drehzahl der Verbrennungskraftmaschine (5, 205) zu erhöhen;
ab dem weiteren zweiten Zeitpunkt (t2') Zuführen von Kraftstoff an die Verbrennungskraftmaschine (5, 205);
ab einem weiteren dritten Zeitpunkt (t3`), bei dem die Drehzahl der Verbrennungskraftmaschine eine Zieldrehzahl (151) für den parallelen Hybridbetrieb erreicht oder übersteigt, Betreiben der ersten Elektromaschine (9, 209) im generatorischen Betrieb;
bis zu dem weiteren vierten Zeitpunkt (t4') Betreiben der ersten Elektromaschine im generatorischen Betrieb, um die Drehzahl der Verbrennungskraftmaschine auf die Zieldrehzahl für den parallelen Hybridbetrieb zu bringen, falls zum weiteren dritten Zeitpunkt (t3') die Drehzahl der Verbrennungskraftmaschine die Zieldrehzahl für den parallelen Hybridbetrieb übersteigt;
bei dem weiteren vierten Zeitpunkt (t4') Schließen der Hauptkupplung (17, K0);
ab dem weiteren vierten Zeitpunkt (t4') Betreiben der Verbrennungskraftmaschine (5, 205) mit der Zieldrehzahl (151) für den parallelen Hybridbetrieb;
zwischen dem weiteren vierten Zeitpunkt (t4') und einem weiteren fünften Zeitpunkt (t5') Erzeugen des Fahrantriebsdrehmoments zeitlich zunehmend durch von der Verbrennungskraftmaschine (5, 205) erzeugtem Drehmoment und zeitlich abnehmend durch von der zweiten Elektromaschine (11, 211) erzeugtem Drehmoment;
ab dem weiteren fünften Zeitpunkt (t5') Erzeugen des Fahrantriebsdrehmoments ausschließlich mittels der Verbrennungskraftmaschine (5, 205).

5. Verfahren gemäß Anspruch 4, wobei das Verfahren ferner aufweist:
Ab dem weiteren fünften Zeitpunkt Erhöhen der Leistung der Verbrennungskraftmaschine (5, 205) um eine Lastpunkterhöhungsleistung über eine Sollantriebsleistung hinaus und Laden des Akkumulators (13, 213) mit einer der Lastpunkterhöhungsleistung entsprechenden Ladeleistung.

6. Verfahren gemäß einem der vorangehenden Ansprüche, wobei der erste Betriebsmodus der parallele Hybridbetrieb ist und der zweite Betriebsmodi der serielle Hybridbetrieb ist, wobei das Wechseln aufweist:
bis zu einem noch weiteren ersten Zeitpunkt (t1") bei geschlossener Hauptkupplung (17, K0) Erzeugen des Fahrantriebsdrehmoments mittels der Verbrennungskraftmaschine (5, 205), während die zweite Elektromaschine (11, 211) ausgeschaltet ist;
ab dem noch weiteren ersten Zeitpunkt (t1") bis zu einem noch weiteren zweiten Zeitpunkt (t2") Betreiben der ersten Elektromaschine (9, 209) im generatorischen Betrieb, um eine zeitlich zunehmende elektrische Energie zu erzeugen;
Verwenden der zeitlich zunehmenden elektrischen Energie, um mittels der zweiten Elektromaschine (11, 211) ein zeitlich zunehmendes Drehmoment auf das Antriebsrad (15, 215) zu übertragen;
bei dem noch weiteren zweiten Zeitpunkt (t2") Öffnen der Hauptkupplung (17, K0);
ab dem noch weiteren zweiten Zeitpunkt (t2") Erzeugen des Fahrantriebsdrehmoments ausschließlich mittels der zweiten Elektromaschine (11, 211).

7. Verfahren gemäß Anspruch 6, wobei das Verfahren ferner aufweist:
zwischen dem noch weiteren zweiten Zeitpunkt (t2") und einem noch weiteren dritten Zeitpunkt (t3") Verändern der Drehzahl der Verbrennungskraftmaschine (5, 205), um eine Zieldrehzahl (115) für den seriellen Betrieb zu erreichen.

8. Verfahren gemäß einem der vorangehenden Ansprüche,
wobei die Antriebseinrichtung (3, 203) eine Hauptkupplung (17, K0) umfasst, die zwischen der Verbrennungskraftmaschine (5, 205) und dem Antriebsrad (15, 215) angeordnet ist, wobei die Hauptkupplung (17, K0) im rein elektrischen Betrieb und/oder im seriellen Hybridbetrieb geöffnet wird, und/oder
wobei die erste Kupplung (27, K1) im elektrischen Betrieb geöffnet wird, und/oder
wobei die Antriebseinrichtung eine zweite Kupplung (37, K2) umfasst, die zwischen der zweiten Elektromaschine (11, 211) und dem Antriebsrad (15, 215) angeordnet ist, wobei die zweite Kupplung (37, K2) im parallelen Hybridbetrieb geöffnet wird.

9. Verfahren gemäß einem der vorangehenden Ansprüche 2, 3, 6 oder 7, wobei der Wechsel in den seriellen Hybridbetrieb nur durchgeführt wird,
falls sowohl die Fahrgeschwindigkeit unterhalb einer Fahrgeschwindigkeitsschwelle (65) liegt als auch eine Sollantriebsleistung und/oder ein Sollantriebsdrehmoment oberhalb einer Elektrischer-Betrieb-Schwelle (67) liegt,
oder falls sowohl die Fahrgeschwindigkeit oberhalb einer Fahrgeschwindigkeitsschwelle (65) liegt als auch eine Sollantriebsleistung und/oder ein Sollantriebsdrehmoment oberhalb einer Parallelhybridbetrieb-Schwelle (69, 71) liegt,
wobei bei Betreiben der Antriebseinrichtung (3, 203) im seriellen Hybridbetrieb die Verbrennungskraftmaschine (5, 205) an einem Arbeitspunkt (93) basierend auf einem kombinierten Wirkungsgrad, welcher von dem Wirkungsgrad der Verbrennungskraftmaschine (5, 205) und von dem Wirkungsgrad der ersten Elektromaschine (9, 209) abhängt, betrieben wird.

10. Hybridfahrzeug (1, 201), aufweisend:
eine Antriebseinrichtung (3, 203) zum Antreiben eines Antriebsrads (15, 215) des Hybridfahrzeuges,
wobei die Antriebseinrichtung (3, 203) eine Verbrennungskraftmaschine (5, 205), eine mit der Verbrennunaskraftmaschine (5, 205) gekoppelte erste Elektromaschine (9, 209), eine zweite Elektromaschine (11, 211), einen elektrischen Akkumulator (13, 213) und eine Hauptkupplung (17, K0) zwischen der Verbrennungskraftmaschine und dem Antriebsrad umfasst,
**dadurch gekennzeichnet, dass** die Antriebseinrichtung (3, 203) eine erste Kupplung (27, K1) umfasst, die zwischen der ersten Elektromaschine (9, 209) und der Verbrennungskraftmaschine (5, 205) angeordnet ist, wobei die erste Kupplung (27, K1) in einem parallelen Hybridbetrieb geöffnet werden kann,
und dass die Antriebseinrichtung (3, 203)
eine Antriebseinrichtungssteuerung (6, 206) umfasst, welche ausgebildet ist, ein Verfahren gemäß einem der vorangehenden Ansprüche auszuführen oder zu steuern.

## Claims

1. Method for operating a drive apparatus (3, 203) of a hybrid vehicle (1, 201) for driving a drive wheel (15, 215), the drive apparatus comprising an internal combustion engine (5, 205), a first electric machine (9, 209) coupled to the internal combustion engine, a second electric machine (11, 211), an electric accumulator (13, 213) and a main clutch (17, K0) between the internal combustion engine (5, 205) and the drive wheel (15, 215), the method comprising:
operating the drive apparatus (3, 203) in a first operating mode of the following three operating modes:
a purely electric operation, in which a drive torque acting on the drive wheel (15, 215) is effected by means of the second electric machine (11, 211) while the internal combustion engine (5, 205) is switched off;
a serial hybrid operation, in which the internal combustion engine (5, 205) drives the first electric machine (9, 209) to generate electrical energy which is used by the second electric machine (11, 211) to effect the drive torque;
a parallel hybrid operation, in which the drive torque is effected by means of the internal combustion engine (5, 205);
and switching at least once from the first operating mode to a second operating mode of the three operating modes, the drive torque provided during the switch from the first operating mode to the second operating mode corresponding to a suitably selectable profile between the drive torque provided before and after the switch,
**characterized in that** operating the drive apparatus (3, 203) in the parallel hybrid operation comprises the following method step: opening a first clutch (27, K1) of the drive apparatus (3, 203), which clutch is arranged between the first electric machine (9, 209) and the internal combustion engine (5, 205).

2. Method according to claim 1, wherein the first operating mode is the purely electric operation, and the second operating mode is the serial hybrid operation, wherein switching comprises:
up to a first point in time (t1), operating the second electric machine (11, 211) in the electromotive operation using electrical energy from the accumulator (13, 213);
from the first point in time (t1) and at least up to a second point in time (t2), from which a rotational speed of the internal combustion engine (5, 205) reaches or exceeds a starting rotational speed threshold (113), operating the first electric machine (9, 209) in the electromotive operation to generate a torque in order to increase a rotational speed of the internal combustion engine (5, 205);
from the second point in time (t2), supplying fuel to the internal combustion engine (5, 205);
from a third point in time (t3), at which the rotational speed of the internal combustion engine (5, 205) reaches or exceeds a target rotational speed for the serial operation, operating the first electric machine (9, 209) in the generator operation to generate electrical energy;
between the third point in time (t3) and a fourth point in time (t4), operating the second electric machine (11, 211) in the electromotive operation by supplying electrical energy from the accumulator (13, 213) decreasingly over time and supplying electrical energy generated by means of the internal combustion engine (5, 205) via the first electric machine (9, 209) increasingly over time; and
from the fourth point in time (t4), operating the second electric machine (11, 211) in the electromotive operation using electrical energy generated by means of the internal combustion engine (5, 205) via the first electric machine (9, 209).

3. Method according to claim 2, wherein the method further comprises:
between the fourth point in time (t4) and a fifth point in time (t5), increasing the power output of the internal combustion engine (5, 205) to a target power which is above a target drive power by a load point increase power, and, from the fifth point in time (t5), charging the accumulator (13, 213) with a charging power corresponding to the load point increase power.

4. Method according to any of the preceding claims, wherein the first operating mode is the purely electric operation and the second operating mode is the parallel hybrid operation, wherein switching comprises:
up to a further fourth point in time (t4'), holding open the main clutch (17, K0);
up to a further first point in time (t1'), operating the second electric machine (11, 211) in the electromotive operation using electrical energy from the accumulator (13, 213);
from the further first point in time (t1') and at least up to a further second point in time (t2'), from which a rotational speed of the internal combustion engine (5, 205) reaches or exceeds a starting rotational speed threshold, operating the first electric machine (9, 209) in the electromotive operation to generate a torque in order to increase a rotational speed of the internal combustion engine (5, 205);
from the further second point in time (t2'), supplying fuel to the internal combustion engine (5, 205);
from a further third point in time (t3'), at which the rotational speed of the internal combustion engine reaches or exceeds a target rotational speed (151) for the parallel hybrid operation, operating the first electric machine (9, 209) in the generator operation;
up to the further fourth point in time (t4'), operating the first electric machine in the generator operation in order to bring the rotational speed of the internal combustion engine to the target rotational speed for the parallel hybrid operation, if the rotational speed of the internal combustion engine exceeds the target rotational speed for the parallel hybrid operation at the further third point in time (t3');
at the further fourth point in time (t4'), closing the main clutch (17, K0);
from the further fourth point in time (t4'), operating the internal combustion engine (5, 205) at the target rotational speed (151) for the parallel hybrid operation;
between the further fourth point in time (t4') and a further fifth point in time (t5'), generating the drive torque increasingly over time using torque generated by means of the internal combustion engine (5, 205) and decreasingly over time using torque generated by means of the second electric machine (11, 211);
from the further fifth point in time (t5'), generating the drive torque exclusively by means of the internal combustion engine (5, 205).

5. Method according to claim 4, wherein the method further comprises:
from the further fifth point in time, increasing the power of the internal combustion engine (5, 205) above a target drive power by a load point increase power, and charging the accumulator (13, 213) with a charging power corresponding to the load point increase power.

6. Method according to any of the preceding claims, wherein the first operating mode is the parallel hybrid operation and the second operating mode is the serial hybrid operation, wherein switching comprises:
up to a still further first point in time (t1"), when the main clutch (17, K0) is closed, generating the drive torque by means of the internal combustion engine (5, 205) while the second electric machine (11, 211) is switched off;
from the still further first point in time (t1") up to a still further second point in time (t2"), operating the first electric machine (9, 209) in the generator mode in order to generate an electrical energy that increases with time;
using the electrical energy that increases with time in order to transmit a torque that increases with time to the drive wheel (15, 215) by means of the second electric machine (11, 211);
at the still further second point in time (t2"), opening the main clutch (17, K0);
from the still further second point in time (t2"), generating the drive torque exclusively by means of the second electric machine (11, 211).

7. Method according to claim 6, wherein the method further comprises:
between the still further second point in time (t2") and a still further third point in time (t3"), changing the rotational speed of the internal combustion engine (5, 205) in order to achieve a target rotational speed (115) for the serial operation.

8. Method according to any of the preceding claims,
wherein the drive apparatus (3, 203) comprises a main clutch (17, K0) which is arranged between the internal combustion engine (5, 205) and the drive wheel (15, 215), wherein the main clutch (17, K0) is opened in the purely electric operation and/or in the serial hybrid operation, and/or
wherein the first clutch (27, K1) is opened in the electric operation, and/or
wherein the drive apparatus comprises a second clutch (37, K2) which is arranged between the second electric machine (11, 211) and the drive wheel (15, 215), wherein the second clutch (37, K2) is opened in the parallel hybrid operation.

9. Method according to any of the preceding claims 2, 3, 6 or 7, wherein switching to the serial hybrid operation is only carried out
if both the travel speed is below a travel speed threshold (65) and a target drive power and/or a target drive torque is above an electric operation threshold (67),
or if both the travel speed is above a travel speed threshold (65) and a target drive power and/or a target drive torque is above a parallel hybrid operation threshold (69, 71),
wherein, when the drive apparatus (3, 203) is operated in the serial hybrid operation, the internal combustion engine (5, 205) is operated at an operating point (93) based on a combined efficiency which depends on the efficiency of the internal combustion engine (5, 205) and on the efficiency of the first electric machine (9, 209).

10. Hybrid vehicle (1, 201) comprising:
a drive apparatus (3, 203) for driving a drive wheel (15, 215) of the hybrid vehicle,
the drive apparatus (3, 203) comprising an internal combustion engine (5, 205), a first electric machine (9, 209) coupled to the internal combustion engine (5, 205), a second electric machine (11, 211), an electric accumulator (13, 213) and a main clutch (17, K0) between the internal combustion engine and the drive wheel,
**characterized in that** the drive apparatus (3, 203) has a first clutch (27, K1) which is arranged between the first electric machine (9, 209) and the internal combustion engine (5, 205), it being possible for the first clutch (27, K1) to be opened in a parallel hybrid operation,
**and in that** the drive apparatus (3, 203) comprises a drive apparatus controller (6, 206) which is designed to carry out or control a method according to any of the preceding claims.

## Revendications

1. Procédé permettant de faire fonctionner un dispositif d'entraînement (3, 203) d'un véhicule hybride (1, 201) pour l'entraînement d'une roue motrice (15, 215), dans lequel le dispositif d'entraînement comprend un moteur à combustion interne (5, 205), un premier moteur électrique (9, 209) accouplé au moteur à combustion interne, un second moteur électrique (11, 211), un accumulateur électrique (13, 213) et un embrayage principal (17, K0) entre le moteur à combustion interne (5, 205) et la roue motrice (15, 215), le procédé présentant :
le fonctionnement du dispositif d'entraînement (3, 203) dans un premier mode de fonctionnement parmi les trois modes de fonctionnement suivants :
un fonctionnement purement électrique, dans lequel un couple d'entraînement de déplacement agissant sur la roue motrice (15, 215) est créé au moyen du second moteur électrique (11, 211), tandis que le moteur à combustion interne (5, 205) est arrêté ;
un fonctionnement hybride série, dans lequel le moteur à combustion interne (5, 205) entraîne le premier moteur électrique (9, 209) pour produire de l'énergie électrique qui est utilisée par le second moteur électrique (11, 211) afin de créer le couple d'entraînement de déplacement ;
un fonctionnement hybride parallèle, dans lequel le couple d'entraînement de déplacement est créé au moyen du moteur à combustion interne (5, 205) ;
et le passage au moins une fois du premier mode de fonctionnement à un deuxième mode de fonctionnement parmi les trois modes de fonctionnement, le couple d'entraînement de déplacement fourni pendant le passage du premier mode de fonctionnement au deuxième mode de fonctionnement correspondant à une variation pouvant être sélectionnée de manière appropriée entre le couple d'entraînement de déplacement fourni avant et après le passage,
**caractérisé en ce que** le fonctionnement du dispositif d'entraînement (3, 203) dans le fonctionnement hybride parallèle présente l'étape de procédé suivante : ouverture d'un premier embrayage (27, K1) du dispositif d'entraînement (3, 203) qui est agencé entre le premier moteur électrique (9, 209) et le moteur à combustion interne (5, 205).

2. Procédé selon la revendication 1, dans lequel le premier mode de fonctionnement est le fonctionnement purement électrique et le deuxième mode de fonctionnement est le fonctionnement hybride série, le passage présentant :
jusqu'à un premier instant (t1), le fonctionnement du second moteur électrique (11, 211) dans le fonctionnement électromoteur avec de l'énergie électrique provenant de l'accumulateur (13, 213) ;
à partir du premier instant (t1) et au moins jusqu'à un deuxième instant (t2) à partir duquel une vitesse de rotation du moteur à combustion interne (5, 205) atteint ou dépasse un seuil de vitesse de rotation de démarrage (113), le fonctionnement du premier moteur électrique (9, 209) dans le fonctionnement électromoteur pour produire un couple afin d'augmenter une vitesse de rotation du moteur à combustion interne (5, 205) ;
à partir du deuxième instant (t2), l'alimentation en carburant du moteur à combustion interne (5, 205) ;
à partir d'un troisième instant (t3) auquel la vitesse de rotation du moteur à combustion interne (5, 205) atteint ou dépasse une vitesse de rotation cible pour le fonctionnement série, le fonctionnement du premier moteur électrique (9, 209) dans le fonctionnement générateur pour produire de l'énergie électrique ;
entre le troisième instant (t3) et un quatrième instant (t4), le fonctionnement du second moteur électrique (11, 211) dans le fonctionnement électromoteur en diminuant dans le temps l'alimentation en énergie électrique provenant de l'accumulateur (13, 213) et en augmentant dans le temps l'alimentation en énergie électrique produite au moyen du moteur à combustion interne (5, 205) par l'intermédiaire du premier moteur électrique (9, 209) ; et
à partir du quatrième instant (t4), le fonctionnement du second moteur électrique (11, 211) dans le fonctionnement électromoteur avec de l'énergie électrique qui est produite par l'intermédiaire du premier moteur électrique (9, 209) au moyen du moteur à combustion interne (5, 205).

3. Procédé selon la revendication 2, dans lequel le procédé présente en outre :
entre le quatrième instant (t4) et un cinquième instant (t5), l'augmentation de la puissance de sortie du moteur à combustion interne (5, 205) jusqu'à une puissance de consigne qui est supérieure à une puissance d'entraînement de consigne d'une puissance d'augmentation du point de charge, et à partir du cinquième instant (t5), la charge de l'accumulateur (13, 213) avec une puissance de charge correspondant à la puissance d'augmentation du point de charge.

4. Procédé selon l'une des revendications précédentes, dans lequel le premier mode de fonctionnement est le fonctionnement purement électrique et le deuxième mode de fonctionnement est le fonctionnement hybride parallèle, le passage présentant :
jusqu'à un autre quatrième instant (t4`), le maintien de l'embrayage principal (17, K0) ouvert ;
jusqu'à un autre premier instant (t1'), le fonctionnement du second moteur électrique (11, 211) dans le fonctionnement électromoteur avec de l'énergie électrique provenant de l'accumulateur (13, 213) ;
à partir de l'autre premier instant (t1') et au moins jusqu'à un autre deuxième instant (t2`) à partir duquel une vitesse de rotation du moteur à combustion interne (5, 205) atteint ou dépasse un seuil de vitesse de rotation de démarrage, le fonctionnement du premier moteur électrique (9, 209) dans le fonctionnement électromoteur pour produire un couple afin d'augmenter une vitesse de rotation du moteur à combustion interne (5, 205) ;
à partir de l'autre deuxième instant (t2'), l'alimentation en carburant du moteur à combustion interne (5, 205) ;
à partir d'un autre troisième instant (t3') auquel la vitesse de rotation du moteur à combustion interne atteint ou dépasse une vitesse de rotation cible (151) pour le fonctionnement hybride parallèle, le fonctionnement du premier moteur électrique (9, 209) dans le fonctionnement générateur ;
jusqu'à l'autre quatrième instant (t4`), le fonctionnement du premier moteur électrique dans le fonctionnement générateur pour amener la vitesse de rotation du moteur à combustion interne jusqu'à la vitesse de rotation cible pour le fonctionnement hybride parallèle, si à l'autre troisième instant (t3'), la vitesse de rotation du moteur à combustion interne dépasse la vitesse de rotation cible pour le fonctionnement hybride parallèle ;
à l'autre quatrième instant (t4`), la fermeture de l'embrayage principal (17, K0) ;
à partir de l'autre quatrième instant (t4`), le fonctionnement du moteur à combustion interne (5, 205) à la vitesse de rotation cible (151) pour le fonctionnement hybride parallèle ;
entre l'autre quatrième instant (t4`) et un autre cinquième instant (t5'), la production du couple d'entraînement de déplacement augmentant dans le temps grâce au couple produit par le moteur à combustion interne (5, 205) et diminuant dans le temps grâce au couple produit par le second moteur électrique (11, 211) ;
à partir de l'autre cinquième instant (t5'), la production du couple d'entraînement de déplacement exclusivement au moyen du moteur à combustion interne (5, 205).

5. Procédé selon la revendication 4, dans lequel le procédé présente en outre :
à partir de l'autre cinquième instant, l'augmentation de la puissance du moteur à combustion interne (5, 205) d'une puissance d'augmentation du point de charge au-delà d'une puissance d'entraînement de consigne et la charge de l'accumulateur (13, 213) avec une puissance de charge correspondant à la puissance d'augmentation du point de charge.

6. Procédé selon l'une des revendications précédentes, dans lequel le premier mode de fonctionnement est le fonctionnement hybride parallèle et le deuxième mode de fonctionnement est le fonctionnement hybride série, le passage présentant :
jusqu'à encore un autre premier instant (t1"), lorsque l'embrayage principal (17, K0) est fermé, la production du couple d'entraînement de déplacement au moyen du moteur à combustion interne (5, 205), tandis que le second moteur électrique (11, 211) est arrêté ;
à partir de l'encore un autre premier instant (t1") jusqu'à encore un autre deuxième instant (t2"), le fonctionnement du premier moteur électrique (9, 209) dans le fonctionnement générateur pour produire une énergie électrique augmentant dans le temps ;
l'utilisation de l'énergie électrique augmentant dans le temps pour transmettre un couple augmentant dans le temps à la roue motrice (15, 215) au moyen du second moteur électrique (11, 211) ;
à l'encore un autre deuxième instant (t2"), l'ouverture de l'embrayage principal (17, K0) ;
à partir de l'encore un autre deuxième instant (t2"), la production du couple d'entraînement de déplacement exclusivement au moyen du second moteur électrique (11, 211).

7. Procédé selon la revendication 6, dans lequel le procédé présente en outre :
entre l'encore un autre deuxième instant (t2") et encore un autre troisième instant (t3"), la modification de la vitesse de rotation du moteur à combustion interne (5, 205) afin d'atteindre une vitesse de rotation cible (115) pour le fonctionnement série.

8. Procédé selon l'une des revendications précédentes,
dans lequel le dispositif d'entraînement (3, 203) comprend un embrayage principal (17, K0) agencé entre le moteur à combustion interne (5, 205) et la roue motrice (15, 215), l'embrayage principal (17, K0) étant ouvert dans le fonctionnement purement électrique et/ou dans le fonctionnement hybride série, et/ou
le premier embrayage (27, K1) étant ouvert dans le fonctionnement électrique, et/ou
le dispositif d'entraînement comprenant un second embrayage (37, K2) agencé entre le second moteur électrique (11, 211) et la roue motrice (15, 215), le second embrayage (37, K2) étant ouvert dans le fonctionnement hybride parallèle.

9. Procédé selon l'une des revendications précédentes 2, 3, 6 ou 7, dans lequel le passage vers le fonctionnement hybride série est réalisé uniquement
si à la fois la vitesse de déplacement est inférieure à un seuil de vitesse de déplacement (65) et une puissance d'entraînement de consigne et/ou un couple d'entraînement de consigne sont supérieurs à un seuil de fonctionnement électrique (67),
ou si à la fois la vitesse de déplacement est supérieure à un seuil de vitesse de déplacement (65) et une puissance d'entraînement de consigne et/ou un couple d'entraînement de consigne sont supérieurs à un seuil de fonctionnement hybride parallèle (69, 71),
lorsque le dispositif d'entraînement (3, 203) fonctionne dans le fonctionnement hybride série, le moteur à combustion interne (5, 205) fonctionnant à un point d'activité (93) basé sur un rendement combiné qui dépend du rendement du moteur à combustion interne (5, 205) et du rendement du premier moteur électrique (9, 209).

10. Véhicule hybride (1, 201), présentant :
un dispositif d'entraînement (3, 203) pour l'entraînement d'une roue motrice (15, 215) du véhicule hybride,
dans lequel le dispositif d'entraînement (3, 203) comprend un moteur à combustion interne (5, 205), un premier moteur électrique (9, 209) accouplé au moteur à combustion interne (5, 205), un second moteur électrique (11, 211), un accumulateur électrique (13, 213) et un embrayage principal (17, K0) entre le moteur à combustion interne et la roue motrice,
**caractérisé en ce que** le dispositif d'entraînement (3, 203) comprend un premier embrayage (27, K1) agencé entre le premier moteur électrique (9, 209) et le moteur à combustion interne (5, 205), le premier embrayage (27, K1) pouvant être ouvert dans un fonctionnement hybride parallèle,
**et en ce que** le dispositif d'entraînement (3, 203) comprend une commande de dispositif d'entraînement (6, 206) qui est configurée pour exécuter ou commander un procédé selon l'une des revendications précédentes.
